# EUROPEAN PATENT APPLICATION

(11) **EP 2 873 711 A1**
(43) Date of publication of application: **20.05.2015**
(21) Application number: 13306572.2
(22) Date of filing: 18.11.2013
(51) Int. Cl.: C09K 11/06, F21K 2/04

(54) **Platinum complexes**

(71) Applicant: Centre National de la Recherche Scientifique (CNRS), 75016 Paris (FR); Université de Strasbourg, 67000 Strasbourg (FR)
(72) Inventor: De Cola, Luisa, 67000 Strasboug (FR); Mauro, Matteo, 73056 Taurisano (IT); Cebrian Avila, Cristina, 46620 Ayora (ES); Aliprandi, Alessandro, 44100 Ferrara (IT)
(74) Representative: Blot, Philippe Robert Emile

(57) **Abstract**

The invention relates to the use of at least one luminescent platinum complex of formula (Z) as mechanochromic, and especially piezochromic compounds, wherein said platinum complex of formula (Z) is defined by 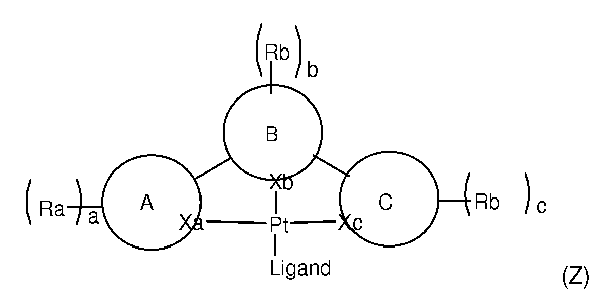 wherein rings A, B and C are 5- or 6-members aromatic rings including atoms Xa, Xb and Xc which are linked to Platinum (Pt), wherein Xa, Xb and Xc are each independently a nitrogen atom or a carbon atom or a sulfur atom or an oxygen atom or a phosphorus atom; other members of rings A, B and C are carbon or nitrogen or sulfur or oxygen or phosphorus atoms; rings A and B are linked by a covalent bond, rings B and C are linked by a covalent bond, rings A, B and C optionally bearing one or more substituents Ra, Rb, and Rc, respectively, a is the number of substituents Ra, b is the number of substituents Rb, c is the number of substituents Rc; a, b, and c being independently 0 or from 1 to 4; Platinum ion is coordinated to a "Ligand" referred to as "L";
L is an organic ligand or an ion.

The invention also relates to such novel compounds.

## Description

### BACKGROUND

As described by Sagara, Y.; Kato, T. "Mechanically induced luminescence changes in molecular assemblies" Nat. Chem. 2009, 1, 605-610, altering the shape and properties of a material through external factors such as heat, light, pressure, pH, electric or magnetic fields, or the introduction of a guest molecule, is an attractive prospect. In this perspective, mechano- and piezo-chromic luminescent materials, which change the color of their luminescence in response to mechanical stimuli, were described. Such piezochromism has been observed for a few molecular materials that contain luminescent cores in liquid-crystalline and crystalline solid states, as well as for polymeric materials doped with dyes. These colour changes in photoluminescence can be activated by various types of mechanical pressure such as shearing, grinding or elongation, which can trigger different mechanisms of producing the color. Such stimuli-responsive materials have potential for various applications, including sensors, memories and displays.

### DESCRIPTION OF THE INVENTION

Mechanochromic luminescence, including piezochromic luminescence, is a rare phenomenon. For some compounds, redissolving the ground solid and drying, heating, exposing to solvent vapors or other methods allow required to erase the marks and revert to the initial, or a second, different, state. Classes of compounds for which piezochromic luminescence is reversible at room temperature are very rare.

As described by Sagara, Y.; Kato, T. "Mechanically induced luminescence changes in molecular assemblies" Nat. Chem. 2009, 1, 605-610, photofunctional materials offer promise for information displays, memories, sensors, probes and photomodulation. In particular, organic and organometallic molecules with luminescent properties have been widely studied for decades and used in a variety of applications, such as in organic light-emitting diodes, fluorescent probes and laser dyes. In general, the photoluminescent properties of organic and organometallic materials depend on the structure of their molecular assemblies. Therefore, controlling the structure of molecular assemblies with external stimuli leads to the development of stimuli-responsive luminescent color-switching materials. In this Perspective, focus is made on photoluminescent molecular assemblies that switch their colors by responding to a mechanical stimulus such as shearing, grinding or pressing - a phenomenon called mechanochromic luminescence, piezochromic luminescence or luminescence tribochromism. Such materials show isothermal changes in luminescent color associated with structural changes in the molecular assemblies, which switch from one state to another under mechanical stimuli.

It has been surprisingly discovered that a platinum complex according to formula (Z) below are luminescent and present mechanochromic colour and mechanochromic luminescence, and in particular piezochromic luminescence properties. The invention relates to such platinum complex.

More particularly, the invention also relates to platinum complex (Z) below or intermediate thereof as novel compounds, and compositions containing such novel compounds.

Intermediates represent notably tridentate compounds defined as rings A-B-C below.
Said platinum complex according to formula (Z) are defined by: 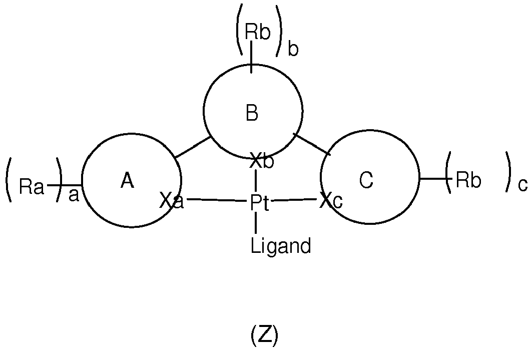
wherein rings A, B and C are 5- or 6-members aromatic rings including atoms Xa, Xb and Xc which are linked to Platinum (Pt), wherein Xa, Xb and Xc are each independently a nitrogen atom or a carbon atom or a sulfur atom or an oxygen atom or a phosphorus atom;
other members of rings A, B and C are carbon or nitrogen or sulfur or oxygen or phosphorus atoms;
rings A and B are linked by a covalent bond, rings B and C are linked by a covalent bond,
rings A, B and C optionally bearing one or more substituents Ra, Rb, and Rc, respectively,
a is the number of substituents Ra,
b is the number of substituents Rb,
c is the number of substituents Rc;
a, b, and c being independently 0 or from 1 to 4;
Platinum ion is coordinated to a "Ligand" referred to as "L" in the present invention; L is an organic ligand or an ion;
Ra, Rb, and Rc are each independently selected from the group consisting of:
   (i) H, F, Cl, Br, I, CH₃, CF₃, NO₂, OH, thiocyanate, isothiocyanate, -NCO, - CN, CHO, COOH, keto, amine, amide, a saturated or unsaturated, linear, branched or cyclic alkyl group, a haloalkyl group, including fluoroalkyl and perfluoroalkyl, an aralkyl group, an alkenyl group, alkynyl group, an aryl group, an amino group, a mono- or di-alkylamino group, a mono- or diaryl amino group, an alkoxy group, an epoxy group an aryloxy group, a heteroaryloxy group, an alkoxycarbonyl group, an acyloxy group, an acylamino group, an alkoxycarbonylamino group, an aryloxycarbonylamino group, a sulfonylamino group, a sulfamoyl group, a carbamoyl group, an alkylthio group, a sulfinyl group, an ureido group, a phosphoramide group, a hydroxyl group, a mercapto group, a halogen atom, a cyano group, a sulfo group, a carboxyl group, a nitro group, a hydrazino group, a substituted silyl group, a polymerizable group, and any combination of these groups,
   (ii) a group of atoms comprising or consisting of linear or branched, chiral or achiral, from 1 to 36 carbon atoms containing any combination of the following groups either pendant or included in the carbon atom chain when proper: F, Cl, Br, I, CH₃, CF₃, NO₂, OH, CHO, COOH, thiocyanate, isothiocyanate, keto, amine, mono-or di- alkylamino, mono- or diaryl-amino, amide, alkoxy, epoxy, heteroaryloxy, alkoxycarbonyl, acyloxy, acylamino, mercapto, sulfonylamino, cyano, carbamoyl, sulfonylamino, sulfamoyl, sulfinyl, mono- or disulfide, linear or branched, chiral or achiral, from 1 to 36 carbon atoms chains selected from aliphatic or alicyclic alkyl, haloalkyl, alkenyl, alkynyl, aryl, ester, carboxy, amine, sulfoxide, amide, phosphine or heterocyclic moieties,
   (iii) a group of atoms comprising or consisting of double or triple bonds containing, optionally polymerizable, groups, including either linear or branched structures, for example ethylenes, allyls, ethynyls, norbonene, alkylacrylates, arylacrylates, alkyl-cyanoacrylates, aryl-cyanoacrylates, diene, dienofiles, butadienes, melamines, diimide, aldehydes, alkylamines, arylamines, celluloses, alkylanhydrides, arylanhydrides, carboxy, diimides, phatalates, carbonates, siloxanes, vinyls, butyrates, thiophenes, styrenes, charged and/or uncharged sulphonates, sulphones, acetales, chetales, phenylethers, alcohols, phenylsulphones, ethersulphones, carbamates;
   (iv) a group of atoms comprising or consisting of one of the following: phosphonium, biotin, aminoacid, polypeptide, protein, antibody, nucleoside, nucleotide, polynucleoside, polynucleotide, diols, polyols, glycol, polyglycols, monosaccharide, disaccharides and polysaccharides moieties, either natural or synthetic,
   (v) a group of atoms comprising or consisting of one or more aromatic rings, such as Phenyl, Chlorophenyl, Tolyl, Anisyl, Trifluoromethylphenyl, Benzyl, Fluorenyl, Carbazolyl, Cyclohexyl, Menthyl, Allyl, Hydroxyphenyl, Pentaflurophenyl, Carboxyphenyl, Naphthyl, Pyridyl, Furyl, Bis-(trifluoromethyl)-phenyl, Carbene, N-heterocyclic Carbene, Imidazolyl, Pyridazinyl, Pyrazinyl, Pyrimidyl, Phosphinyl, any aromatic ring fused with rings A, B and/or C, such as 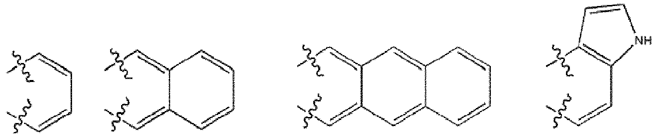 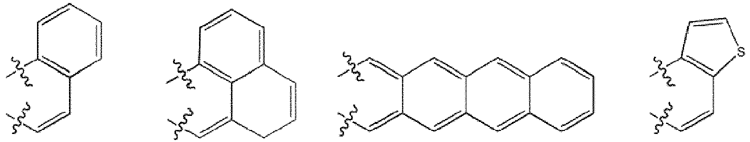 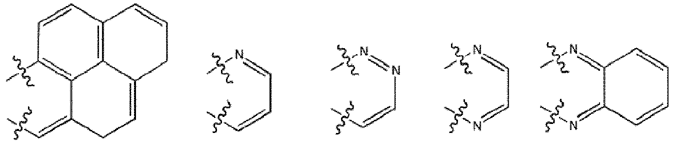 said aromatic rings being optionally substituted;
   (vi) including precursors, and derivatives thereof.
Ra, Rb, and Rc may be charged or neutral groups.

According to one embodiment, Ra, Rb, and Rc are each independently selected from the group consisting of an alkyl group, a haloalkyl group, including fluoroalkyl and perfluoroalkyl, an aralkyl group, an alkenyl group, alkynyl group, an aryl group, an amino group, a mono- or di-alkylamino group, a mono- or diaryl amino group, an alkoxy group, an aryloxy group, a heteroaryloxy group, an alkoxycarbonyl group, an acyloxy group, an acylamino group, an alkoxycarbonylamino group, an aryloxycarbonylamino group, a sulfonylamino group, a sulfamoyl group, a carbamoyl group, an alkylthio group, a sulfinyl group, an ureido group, a phosphoramide group, a hydroxyl group, a mercapto group, a halogen atom, a cyano group, a sulfo group, a carboxyl group, a nitro group, a hydrazino group, a substituted silyl group, a polymerizable group, and any combination of these groups.

For example, Ra, Rb, and Rc are each independently selected from the group consisting of methyl, ethyl, n-propyl, i-Propyl, n-Butyl, s-Butyl, t-Butyl, pentyl, hexyl, F(CF₂)ₘ(CH₂)ₙ- (m= 1-10, n= 0-4), for example -CF₃, phenyl optionally substituted, for example (alkyl)ₙC₆H(₅₋ₙ)- (n=0-5), alkoxy group or polyethers containing groups, for example Polyethylene glycol (PEG), Polypropylene glycol (PPG), Polytetramethylene glycol (PTMG) or Polytetramethylene ether glycol (PTMEG), for example - O(CH₂CH₂O)ₙCH₃ (n = 0-10000).

In one embodiment, Ra, Rb, and Rc may each independently be a (alkyl)ₙC₆H(₅₋ₙ₎-(n=0-5), wherein alkyl is selected from the group consisting of methyl, ethyl, n-propyl, i-Propyl, n-Butyl, t-Butyl, iso-Propyl, pentyl, hexyl.

In one embodiment, Ra, Rb, and Rc may each independently be a (fluoroalkyl)ₙC₆H₍₅₋ₙ)- (n=0-5), for example [F(CF₂)ₘ(CH₂)ₙ]ₚC₆H₍₅₋ₚ₎- (m=1-10, n=0-4, p=0-5), wherein alkyl is preferably selected from the group consisting of methyl, ethyl, n-propyl, i-Propyl, n-Butyl, t-Butyl, iso-Propyl, pentyl, hexyl, and fluoroalkyl iis preferably selected from the group consisting of F(CF₂)ₘ(CH₂)ₙ- (m= 1-10, n= 0-4), for example -CF₃.

For example, Ra, Rb, and Rc are each independently selected from alkoxy groups consisting of methoxy, ethoxy, n-propoxy, i-Propoxy, n-Butoxy, s-Butoxy, t-Butoxy, pentoxy, hexoxy.

In one embodiment, Ra, Rb, and Rc may comprise each independently a polymerizable monomers or polymers. For examples such polymerizable monomers contain groups defined as double or triple bonds containing optionally polymerizable groups (iii) recited above.

Said polymerization may take place for example by known polymerization reactions, such as photo-, thermal, electrochemical or chemical reactions. Said polymerization may be reversible or irreversible by using photo-, thermal, electrochemical or chemical reactions.

Advantageously, rings A, B, and C form a tridentate ligand to platinum.

According to one embodiment, Xa, Xb and Xc, are each nitrogen atoms.

According to another embodiment, two among Xa, Xb and Xc represent nitrogen atoms.

According to another embodiment, only one among Xa, Xb and Xc represents a nitrogen atom.

According to a particular embodiment, Xa represents a nitrogen atom.

According to a particular embodiment, Xb represents a nitrogen atom.

According to a particular embodiment, Xc represents a nitrogen atom.

According to a specific embodiment, one, two or all rings among rings A, B and C contain one or more nitrogen atoms, wherein at least one nitrogen atoms is linked to Platinum (Pt), other members of rings A, B and C are carbon atoms.

According to one embodiment rings A, B, and C may be independently selected from the group consisting of benzene, naphthalene, anthracene and heterocycles selected from the group comprising pyrrole, diazole, triazole, tetrazole, pyridine, quinoline, isoquinoline, acridine, pyrazine, quinoxaline, imidazole, benzimidazole, purine, pyrazole, indazole, pyrimidine, quinazoline, pyridazine, cinnoline, phthalazine, 1,2,3-triazine, 1,2,4-triazine, and 1,3,5-triazine (s-triazine) rings.

Advantageously, ring B is phenyl, pyridine, diazole or triazole. Preferably, in pyridine, diazole or triazole, a nitrogen atom is linked to platinum.

According to one embodiment rings A and/or C contain one (1) nitrogen atoms.

Preferably, rings A and/or C may be represented by pyridine (with apparent links to Pt and ring B): 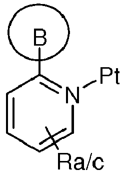 wherein Ra/c represent independently 1 to 4 substituents Ra and/or Rc, or is/are optionally absent.

According to one embodiment rings A and/or C contain two (2) nitrogen atoms.

Preferably, rings A and/or C may be represented by (with apparent links to Pt and ring B): 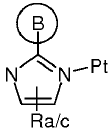 wherein Ra/c represent independently 1 or 2 substituents Ra and/or Rc, or is/are optionally absent.

According to one embodiment rings A and/or C contain three (3) nitrogen atoms.

Preferably, rings A and/or C may be represented by (with apparent links to Pt and B): 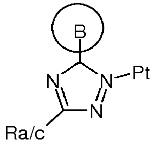 wherein Ra/c represent Ra and/or Rc, and is/are optionally absent.

One specific embodiment is compounds (Z) having the following formula: 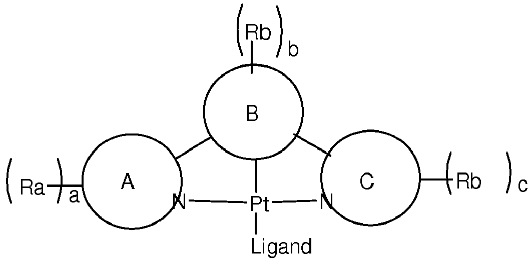
wherein rings A and C each contain one or more nitrogen atoms, wherein at least one nitrogen atoms (N) is linked to Platinum (Pt), other members of rings A and C are carbon atoms; and
wherein ring B contains carbon atoms and optionally one or more nitrogen atoms, wherein at least one nitrogen atom is linked to Platinum (Pt).

One specific embodiment is compounds (Z) having the following formula: 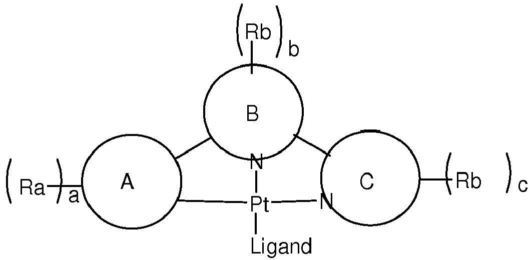
wherein rings B and C each contain one or more nitrogen atoms, wherein at least one nitrogen atoms (N) is linked to Platinum (Pt), other members of rings B and C are carbon atoms; and
wherein ring A contains carbon atoms and optionally one or more nitrogen atoms, wherein at least one nitrogen atom is linked to Platinum (Pt).

More preferably, rings A-B-C are selected from the group consisting of: 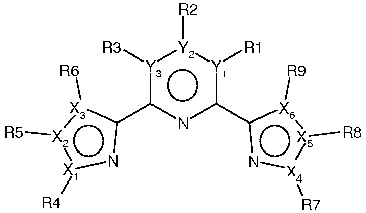 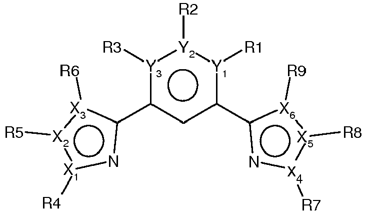 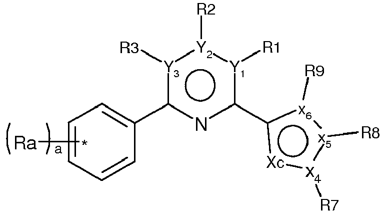 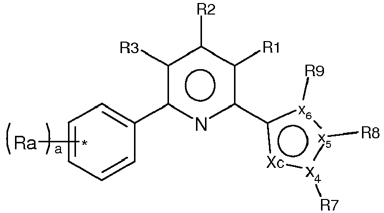 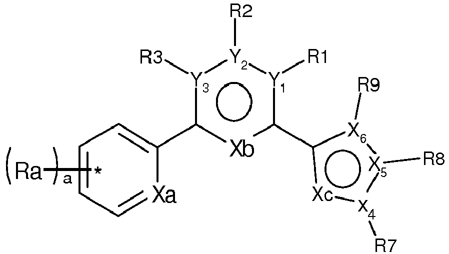 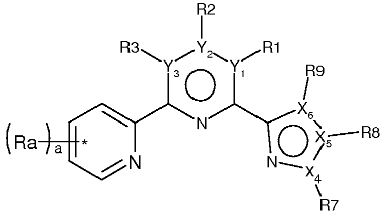 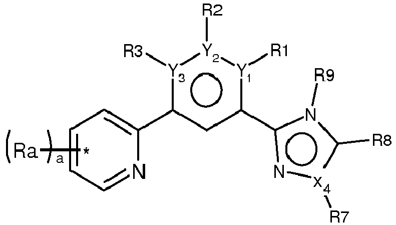 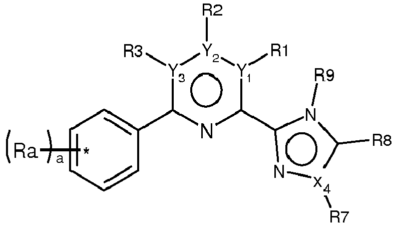 and 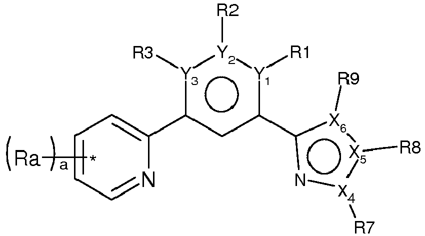
wherein Rᵢ₌₁₋₉ (R1-R9) have each independently the same meaning as Ra, Rb and Rc, and
Yᵢ₌₁₋₃ and Xᵢ₌₁₋₆ are each independently a carbon or nitrogen atom;
- if Yᵢ₌₁₋₉ or Xᵢ₌₁₋₁₈ is a nitrogen atom, then the corresponding substituent Rᵢ₌₁₋₉ is absent;

In one particular embodiment, Xc, X4, X5, X6 are each independently C or N or S.

In one particular embodiment, rings A-B-C are selected from the group consisting of the following formulae (Z1), (Z2), (Z3), (Z4) and (Z5): 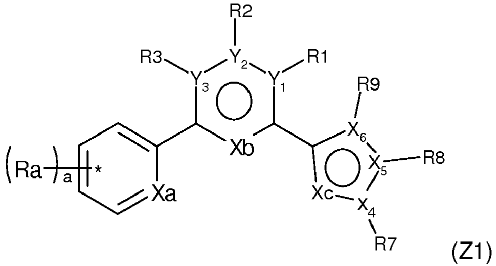 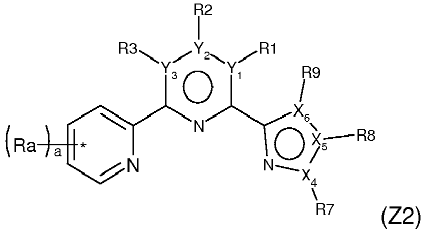 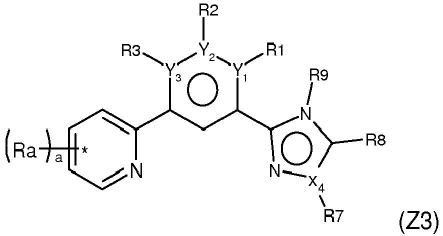 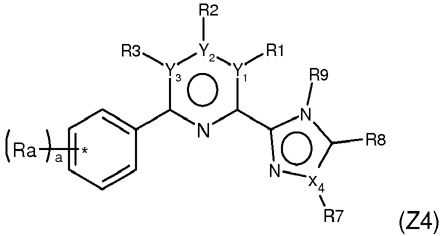 and 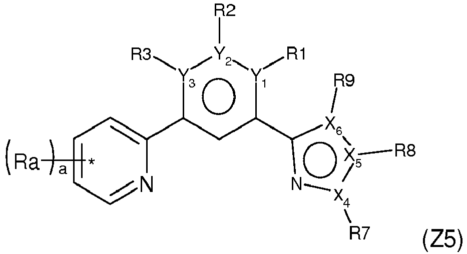
wherein Rᵢ₌₁₋₈ (R1-R8) have each independently the same meaning as Rb and Rc, and
Yᵢ₌₁₋₃ and Xᵢ₌₁₋₆ are each independently a carbon or nitrogen atom;
- if Yᵢ₌₁₋₉ or Xᵢ₌₁₋₁₈ is a nitrogen atom, then the corresponding substituent Rᵢ₌₁₋₉ is absent
wherein in formulae (Z1), (Z2), (Z3) and (Z4) R9 represent an aromatic ring or a polymerizable monomer or polymer, and
wherein in formula (Z5), R9 has the same meaning as Rc. The invention relates to compounds defined by rings rings A-B-C represented by formulae (Z1), (Z2), (Z3), (Z4) and (Z5), and platinum complex thereof, preferably platinum complex as defined by formula (Z).

In one particular embodiment, R9 is an aromatic ring, especially a phenyl ring, optionally substituted.

Advantageously, complex (Z) is defined by formula (IV), (V) (VI), (VII), (VIII), (IX) (X), or (XI) as follows: 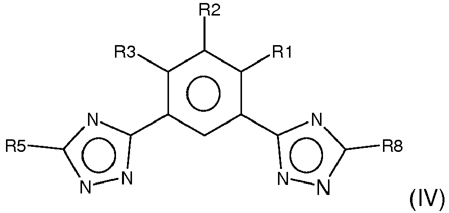 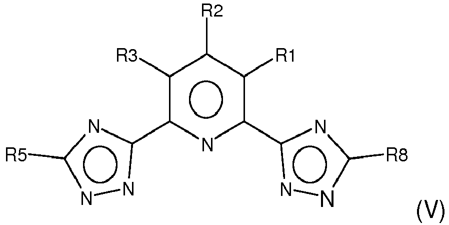 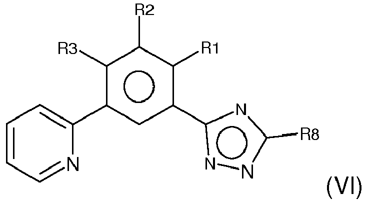 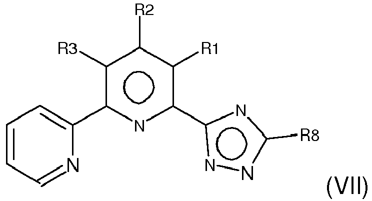 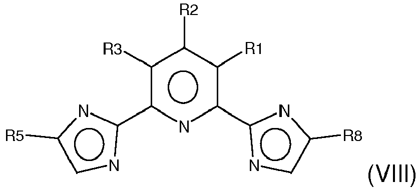 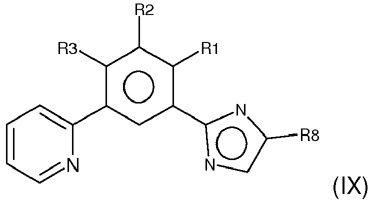 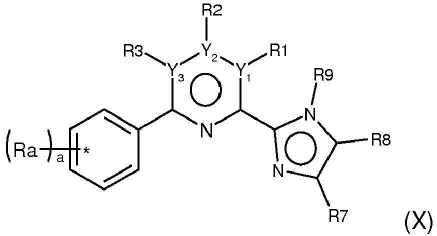 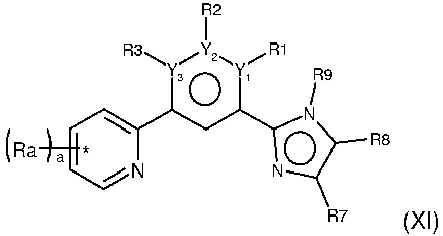 wherein R₁-₃, R₅, and R₈ have each independently the same meaning as Ra, Rb and Rc.

In one particular embodiment of formulae (X) and (XI), R9 is an aromatic ring, especially a phenyl ring, optionally substituted.

The invention more specifically relates to intermediate of formula (Z1), (Z2), (Z3), (Z4) and (Z5), (IV), (V) (VI) (VII), (VIII), (IX), (X) and (XI). Intermediate means that such rings A-B-C may be used to prepare platinum complex as defined in the invention but also for other uses or purposes. Such other uses include the preparation of platinum complex including as ligand L one or more inorganic ligands instead of organic ligand(s) as defined in the invention.

Preferably in formula (IV), (V) (VI) (VII), (VIII), (IX), (X) and (XI), R₁-₃ are hydrogen atoms.

In one particular embodiment, notably in formula (IV), (V) (VI) (VII), (VIII), (IX), (X) and (XI), R₁-₃ are hydrogen atoms and R₅ and R₈ are each independently selected among C₁-₆ alkyl, C₁-₁₄ fluoroalkyl, and phenyl optionally substituted groups. Phenyl is optionally substituted by one or more C₁-₆ alkyl groups, or one or more halogen atoms (Cl, B, F, I, preferably Cl or F).

C₁-₆ alkyl groups are typically methyl, ethyl, n-propyl, i-Propyl, n-Butyl, s-Butyl, t-Butyl, pentyl, hexyl. C₁-₁₄ fluoroalkyl are typically F(CF₂)ₘ(CH₂)ₙ- (m= 1-10, n= 0-4), for example -CF₃. Phenyl optionally substituted are for example (alkyl)ₙC₆H₍₅₋ₙ₎- (n=0-5).

According to one preferred embodiment, L is a monodentate ligand.

In one embodiment, L is possibly a bidentate ligand coordinated to two (2) different platinum ions.

In one embodiment, L is possibly a multidentate ligand linking to multiple platinum ion.

In one embodiment, L is an organic ligand.

In one embodiment, L is a coordinating ion.

L is for example, but not limited to, Cl, Br, I, F, SCN, NSC, CN, OH, pyrazolate, triazolate, tetrazolate, or a derivative thereof.

According to one embodiment, platinum complex of the invention is represented by a platinum complex of formula (I) or (II) as follows: 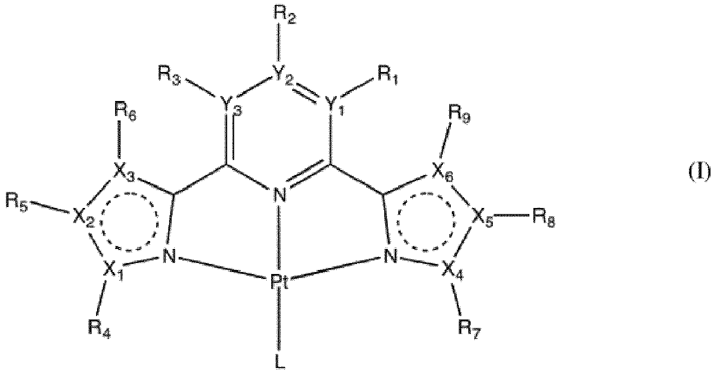 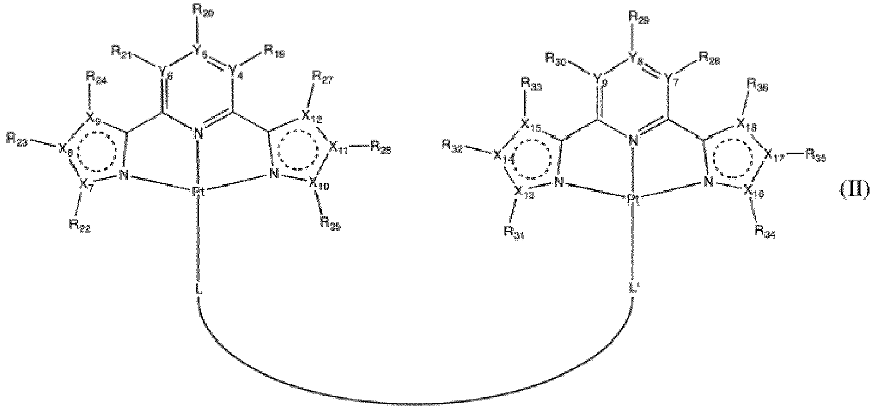
wherein Y₁, Y₂, Y₃, Y₄, Y₅, Y₆, Y₇, Y₈ and Y₉ can be independently either carbon or nitrogen;
X₁, X₂, X₃, X₄, X₅, X₆, X₇, X₈, X₉, X₁₀, X₁₁, X₁₂, X₁₃, X₁₄, X₁₅, X₁₆, X₁₇ and X₁₈ are independently carbon or nitrogen atoms, that may optionally independently combine in such a way to have heterocycles selected from the group consisting of aromatic rings A and C as defined according to the invention, and more preferably are selected from the group consisting of pyrroles, diazoles, triazoles, tetrazoles;
R_{i=1-9;19-36} (in other words R₁ to R₉ and R₁₉ to R₃₆) are each independently selected from the group consisting of substituents defined by Ra, Rb and Rc;
- if Yᵢ₌₁₋₉ or Xᵢ₌₁₋₁₈ is a nitrogen atom, then the corresponding substituent Rᵢ₌₁₋₃₆ is absent;
L is as defined in the present invention and is possibly a ligand L-L' (formula (II) wherein L and L' are each coordinated to one platinum ion. L-L' is a bidentate ligand coordinated to two (2) different platinum ions.

Preferably, L is selected from the group consisting of neutral, mono- or multi- either positively or negatively charged organic ligand to platinum, wherein the tridentate rings A-B-C is either fully neutral or either positively or negatively charged to yield a neutral-core platinum complex of general formula (Z) or any variants and particular or preferred embodiment thereof.

According to one specific embodiment, L is covalently bound to one or more biomolecules selected from the group comprising polypeptide, protein, nucleoside, nucleotide, and polysaccharide.

According to one specific embodiment, L comprises as group binding to platinum one of the following groups: nitrogen, oxygen, sulfur, phosphorus or arsenic containing groups, for example -SO₃⁻, -OSO₃⁻, -phosphonium, -COO⁻, amine, ammonium, carboxylic acid, aminoacid.

According to one embodiment, L is selected from: pyridine, pyrazine, diazine, azoles, carbenes, phosphine, thiocyano, carboxylate, thiol, (di)sulfide, isotiocyanate, cyanate, carbonyl.

In a preferred embodiment L is selected from the group consisting of nitrogen containing groups.

In a preferred embodiment, L is represented by formula (III) or (IV) below: 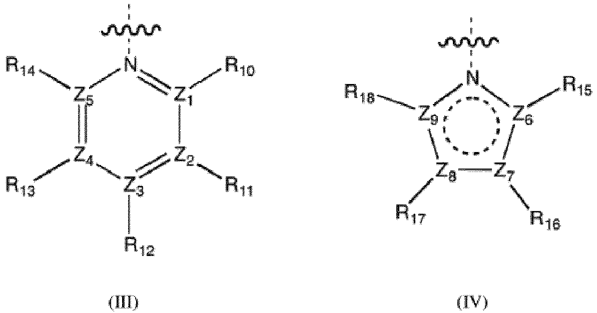
Zᵢ₌₁₋₉ (in other words Z₁-Z₉ or Z₁, Z₂, Z₃, Z₄, Z₅, Z₆, Z₇, Z₈, Z₉) represents independently a carbon or nitrogen atom;
Rᵢ₌₁₀₋₁₈ (in other words R₁₀ to R₁₈) are each independently selected from the group consisting of substituents defined by Ra, Rb and Rc;
if Zᵢ₌₁₋₉ or Xᵢ₌₁₋₁₈ is a nitrogen atom, then the corresponding substituent Rᵢ₌₁₀₋₁₈ is absent.
If two or more of Rᵢ₌₁₀₋₁₈ represent a fused ring, said ring is fused with the aromatic ring represented by formula (III) or (IV) above.

According to one particular embodiment, R₁₀, R₁₁, R₁₃, R₁₄ are hydrogen atoms and R₁₂ is selected from the group consisting of substituents defined by Ra, Rb and Rc, preferably selected among groups comprising or consisting of a polymerizable group, even preferably among amino containing polymerizable groups.

According to one particular embodiment, Zᵢ₌₁₋₉ represents each a carbon atom.

Advantageously, in formula (III) or (IV), Zᵢ₌₁₋₉ represents each a carbon atom, R₁₀, R₁₁, R₁₃, R₁₄, R₁₅ and R₁₈ are hydrogen atoms and R₁₂, R₁₆ and/or R₁₇ are hydroxyalkyl, aminoalkyl optionally containing polymerizable groups.

Advantageously, in formula (III) or (IV), Zᵢ₌₁₋₉ represents each a carbon atom, R₁₀, R₁₁, R₁₃, R₁₄, R₁₅ and R₁₈ are hydrogen atoms and R₁₂, R₁₆ and/or R₁₇ are selected among -NH-(alkyl) groups (linked to Z₃, Z₇ or Z₈ respectively by nitrogen atom), -alkylOH groups (linked to Z₃, Z₇ or Z₈ respectively by carbon atom), said alkyl groups optionally containing polymerizable groups.

In a preferred embodiment, in formula (III) or (IV), Zᵢ₌₁₋₉ represents each a carbon atom, R₁₀, R₁₁, R₁₃, R₁₄, R₁₅ and R₁₈ are hydrogen atoms and R₁₂, R₁₆ and/or R₁₇ are -NH-(alkyl) groups optionally containing polymerizable groups, and particularly are -NH-polyethers groups, wherein polyethers is for example Polyethylene glycol (PEG), Polypropylene glycol (PPG), Polytetramethylene glycol (PTMG) or Polytetramethylene ether glycol (PTMEG), for example -O(CH₂CH₂O)ₙCH₃ (n = 0-10000).

More preferably L is defined by formula (III) including any variants and embodiments thereof.

According to one embodiment, L may coordinate through phosphorus and the L is PAr₃, PR₃, P(OR)₃ or L may coordinate through carbon, wherein L is a N-heterocyclic carbene, carbonyl, or L may coordinate through As, wherein L is AsR₃, AsAr₃, R being independently defined according to the definition of Ra, Rb and Rc, Ar being defined as an aromatic group, for example defined independently according to the definition of rings A, B, and C.

In a further embodiment, the tridentate ligand of the platinum (II) complex (rings A-B-C) is dianionic and L is a neutral monodentate ligand coordinating through nitrogen, phosphorus, carbon, sulphur, or arsenic.

L can be a mono-anionic ligand selected from the group comprising -CN, -NCS, - NSC, -NCO, -SR, -OR, - OAr, pyrazolate, pyrrolate, carbazolate and azolates.

According to one embodiment, the tridentate ligand may also be dianionic and L may be a neutral monodentate ligand according to formula (II), coordinating through nitrogen, phosphorus or carbon, wherein L-L' is selected from the group consisting of 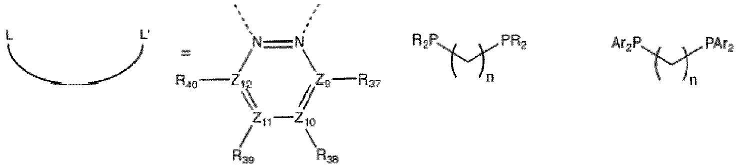 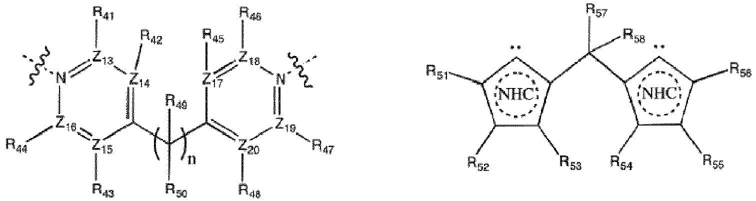
Zᵢ₌₁₀₋₁₉ (in other words Z₁₀-Z₁₉) represents independently a carbon or nitrogen atom;
if Zᵢ₌₁₀₋₁₉ is a nitrogen atom, then the corresponding substituent Rᵢ₌₃₇₋₄₈ is absent.
Rᵢ₌₃₇₋₄₈ are each independently selected from the group consisting of substituents defined by Ra, Rb and Rc.

The platinum complexes may be prepared by the skilled person. Reference is made here to DE 102011001007 and WO 2012/117082, which are incorporated by reference, notably with respect to the preparation of platinum complexes according to the present invention.

One aspect of the present invention relates to platinum complex as defined in the present invention for use as mechanochromic, mechanochromic luminescent, especially piezochromic luminescent molecules. Piezochromic luminescence is notably defined as luminescence change caused by pressure.

Said platinum complex may be exposed to at least one external stimulus and more particularly to an external mechanical stimuli.

"Mechanochromic", "mechanochromism", "mechanoresponsive," luminescence and related terms as used herein refer to changes in the luminescent emission spectrum of light from a solid-state composition after mechanical action, for example upon mechanical disturbance, perturbation, pressure, shearing/smearing, or the like. According to one embodiment such mechanical action is selected from the group consisting of grinding, crushing, milling, extruding, pressing, frictionning, rubbing, and sonification, typically in the solid or solution state. According to one embodiment such mechanical action is atmosphere pressure increase.

A mechanochromic luminescent effect can be observed after disturbance or pressure of a solid-state composition of the invention as applied by a solid physical object (swab tip, pencil eraser, artist's brush), a stream of gas (a breath, an acid, a base), a stream of a liquid or an organic solvent such as water, dichloromethane, acetone, tetrahydrofuran, an acid, a base, the impression of a solid stamp, pressure applied by a piston or other device for transmitting pressure, cellular adhesion, migration, mechanically active tissues and organs, or the like. The mechanochromic luminescent effect is observed in the luminescence of the perturbed solid under illumination by UV light.

Preferably, said color change is reversible. Color change may be reversible upon heating of said platinum complex of formula (Z), or exposing or contacting said platinum complex of formula (Z) with at least one solvent, solvent vapour or release of the mechanical stimulus.

The invention also relates to platinum complex as defined in the present invention for use as solvatochromic molecules, especially solvatochromic luminescent molecules, and methods for using same. Solvatochromic molecules are those which change colour when placed in contact with a solvent or put in different solvating conditions, for example by changing the polarity of solvent.

Some complexes of the invention present elastochromic luminescence, i.e. provide a first color without mechanical action, provide a second upon mechanical action, and come back to the first color when mechanical action is stopped.

Good emission (photoluminescence quantum yield >0.5) quantum fields are obtained with complexes according to the invention.

The emission of platinum complexes according to the present invention is sensitive to pressure, and/or shearing forces. The complexes show therefore interesting mechanochromism.

The invention relates to the use of at least one platinum complex of formula (Z) to emit light upon exposition to at least one external mechanical stimulus. In other words the invention relates to the use of at least one platinum complex of formula (Z) as mechanochromic and especially piezochromic compounds.

The invention relates to a method for modifying emission and/or excitation spectrum of at least one platinum complex of formula (Z) comprising exposing at least one platinum complex of formula (Z) to at least one external mechanical stimulus.

The invention relates to a method for modifying emission and/or excitation spectrum of at least one platinum complex of formula (Z) comprising placing at least one platinum complex of formula (Z) in contact with at least one solvent or putting said platinum complex in different solvating conditions.

The invention also relates to a method for reversibly modifying emission and/or excitation spectrum of at least one platinum complex of formula (Z) from a first spectrum to a second spectrum, said method comprising exposing at least one platinum complex of formula (Z) to at least one external mechanical stimulus and modifying emission and/or excitation spectrum of said platinum complex of formula (Z) from a first spectrum to a second spectrum; and placing said platinum complex of formula (Z) in contact with at least one solvent and modifying emission and/or excitation spectrum of said platinum complex of formula (Z) from the second spectrum to the first spectrum.

The invention also relates to such methods wherein said platinum complex (Z) is comprised in a composition.

The invention relates to a composition comprising at least one platinum complex of formula (Z) according to the invention.

In one embodiment, said composition is a solid composition.

In one embodiment, said composition is a solid surface.

In one embodiment, said composition is selected among paintings, coatings, solid compounds or compositions.

In one embodiment, said composition comprises at least one polymer and at least one platinum complex of formula (Z) according to the invention.

In one embodiment, said composition is a polymer composition. In one embodiment,

said polymer is a tridimensional matrix or gel. Advantageously, said polymer is transparent.

Such polymer may be a thermoplastic, and preferably a polymer selected from the group consisting of:
Acrylonitrile butadiene styrene (ABS)
Acrylic (PMMA)
Celluloid
Cellulose acetate
Cycloolefin Copolymer (COC)
Ethylene-Vinyl Acetate (EVA)
Ethylene vinyl alcohol (EVOH)
Fluoroplastics (PTFE, alongside with FEP, PFA, CTFE, ECTFE, ETFE) lonomers
Kydex, a trademarked acrylic/PVC alloy
Liquid Crystal Polymer (LCP)
Polyacetal (POM or Acetal)
Polyacrylates (Acrylic)
Polyacrylonitrile (PAN or Acrylonitrile)
Polyamide (PA or Nylon)
Polyamide-imide (PAI)
Polyaryletherketone (PAEK or Ketone)
Polybutadiene (PBD)
Polybutylene (PB)
Polybutylene terephthalate (PBT)
Polycaprolactone (PCL)
Polychlorotrifluoroethylene (PCTFE)
Polyethylene terephthalate (PET)
Polycyclohexylene dimethylene terephthalate (PCT)
Polycarbonate (PC)
Polyhydroxyalkanoates (PHAs)
Polyketone (PK)
Polyester
Polyethylene (PE)
Polyetheretherketone (PEEK) Polyetherketoneketone (PEKK)
Polyetherimide (PEI)
Polyethersulfone (PES)- see Polysulfone
Polyethylenechlorinates (PEC)
Polyimide (PI)
Polylactic acid (PLA)
Polymethylpentene (PMP)
Polyphenylene oxide (PPO)
Polyphenylene sulfide (PPS)
Polyphthalamide (PPA)
Polypropylene (PP)
Polystyrene (PS)
Polysulfone (PSU)
Polytrimethylene terephthalate (PTT)
Polyurethane (PU)
Polyvinyl acetate (PVA)
Polyvinyl chloride (PVC)
Polyvinylidene chloride (PVDC)
Styrene-acrylonitrile (SAN); and any mixture thereof.

Preferably, complex (Z) of the invention is solid. It may be under powder, polymer or processed form. Processed form means that the complex or composition containing said complex has been subjected to industrial process for preparing a specific shape thereof. Such processed forms are films or layers.

In one embodiment, the invention relates to a polymeric matrix embedding the platinum complexes. For example such matrices can be stretched and the stress measured with the changes in luminescent or color properties of the matrix.

The invention relates to a device comprising at least one changing color zone, wherein said zone comprises at least one platinum complex of formula (Z), wherein said changing color zone presents a first color which changes into a second color upon exposition of said changing color zone to at least one external stimulus. Said color is preferably obtained by luminescence.

According to one embodiment, said device is a device presenting at least one surface sensitive to at least one external mechanical stimulus.

In one embodiment, said device is a film, for example a transparent or colored film.

In one embodiment, said device is a dynamic label, an information display, an electronic memory, a sensor, a probe, a photomodulator, a light-emitting diode, or a laser dye.

The invention also relates to a kit comprising a product comprising or consisting of at least one platinum complex of formula (Z), said kit also comprising a notice of information that said product color changes upon exposition to at least one external stimulus.

The invention focuses on mechanochromic luminescence and especially piezochromism luminescence of platinum complexes of the invention, i.e. the change in the emission properties, color, excited state lifetimes, emission quantum yields. Preferably said external stimulus is a mechanical stimulus.

The present invention relates to devices or compositions such as paintings, coatings, sensitive surfaces allowing a change in color, especially of luminescence after exerting an external stimulus on a specific zone containing said platinum complex of the invention.

By choosing appropriate tridentate and/or ancillary ligands it is possible to change solubility in organic solvents and/or water. By choosing appropriate tridentate and/or ancillary ligands it is possible to influence the degree of solubility in organic and/or aqueous solvents or to change the excited state properties and color of emission.

### BRIEF DESCRIPTION OF THE FIGURES

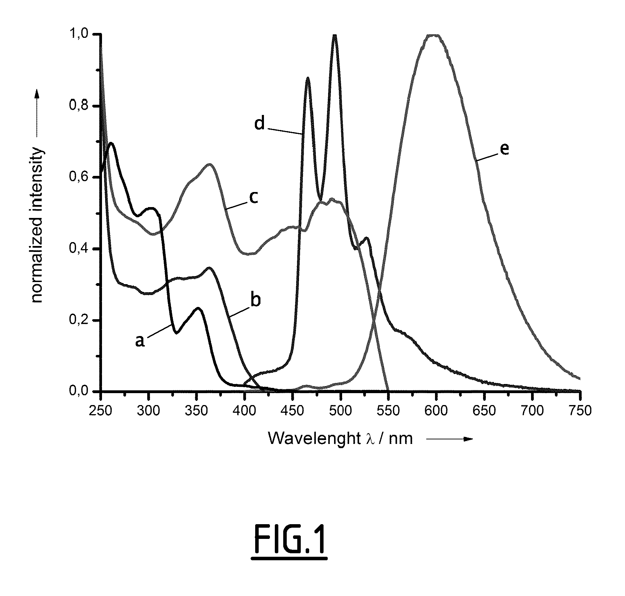

Figure 1 represents mechanochromic luminescence of the complex (ex. 4; ex. 18.1) as powder, before and after grinding, upon excitation at 350 nm, wherein:
   Curve a is the absorption spectrum in dioxane;
   Curve b is the excitation spectrum before grinding;
   Curve c is the excitation spectrum after grinding;
   Curve d is the emission spectrum before grinding;
   Curve e is the emission spectrum after grinding;
   Before grinding the powder is bright blue, after grinding it is bright yellow.

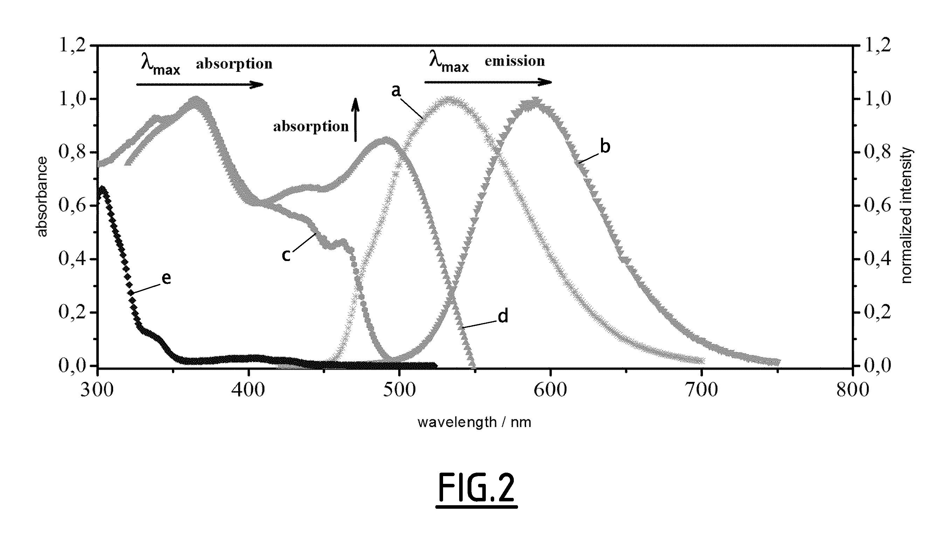

Figure 2 represents mechanochromic luminescence of the complex (ex. 7; ex. 18.2).
   Curve a is the emission spectrum before grinding;
   Curve b is the emission spectrum after grinding;
   Curve c is the excitation spectrum before grinding;
   Curve d is the excitation spectrum after grinding;
   Curve e is the absorption spectrum in CHCl₃;

Absorption spectra in CHCl₃ at concentration 5*10⁻⁵ M. Excitation and emission spectra of the complex as powder.

Excitation spectra were recorded at the maximum of absorbance; emission spectra were recorded upon excitation at 350 nm.

### EXPERIMENTAL PART

The invention specifically relates to compounds as defined in the examples including intermediates thereof.

Rt or RT stands for room temperature, i.e. 20°C.

### Example 1 - Synthesis of complex 1

### Step 1

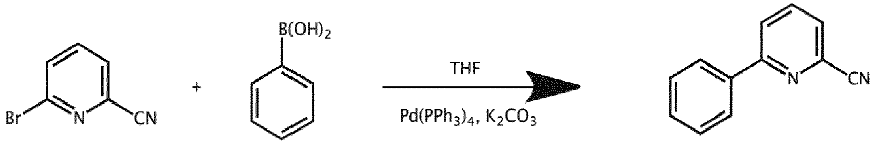

In a 3-neck 100 mL round-bottom flask, 6-bromo-2-cyano-pyridine (1.0 g), phenylboronic acid (0.8 g) and K₂CO₃ (0.91 g) were suspended into 50 mL of THF. The mixture was purged with N₂, then Pd(PPh₃)₄ was added and the resulting mixture over-weekend heated at 70°C. After cooling to room temperature, the compound was precipitated with H₂O and extracted with AcOEt. The organic phases were collected, dried with MgSO₄ and the solvent evaporated under reduced pressure The desired compound was purified on silica gel column chromatography using hexane and AcOEt as eluent. The pure product was obtained as yellow solid. Collected 0.82 g.

### Step 2

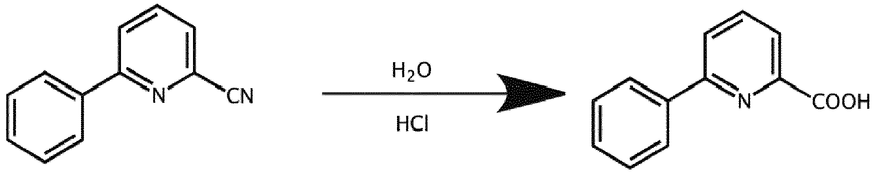

In a 50 mL round-bottom flask, aqueous conc. HCl (5 mL) was added to the staring 2-cyano-6-phenyl pyridine and re reaction mixture refluxed for 2 days. The aqueous phase was extracted with dichloromethane. The yellow solid suspended and filtered. The combined organic phases were dried over MgSO₄ and the solvent removed under reduced pressure. The desired product was obtained as yellow solid. Collected 0.91 g, yield 55%.

### Step 3

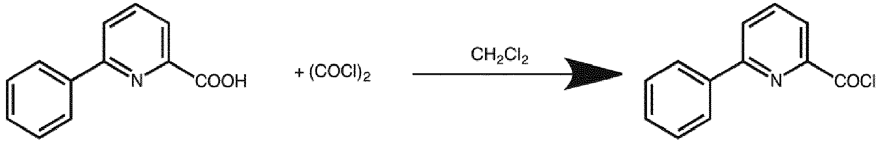

2-carboxy-6-phenyl pyridine (0.5 g) was dissolved in 20 mL of dichloromethane ad (COCl)₂ (1.57 g) was added, and the resulting mixture stirred for 4 hours. The solvent was removed under reduced pressure and the desired product obtained as a yellow liquid, as used for the next step without further purification.

### Step 4

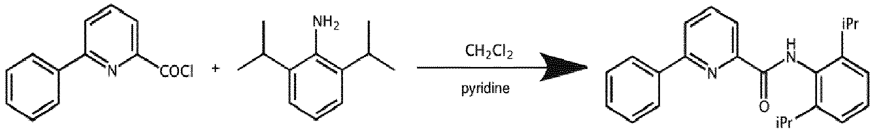

Pyridine (0.45 g) was added to a solution of diisopropyl aniline (0.34 g) in 2 mL of CH₂Cl₂, followed by the 2-carbonylchloride-6-phenyl pyridine obtained from the previous synthesis, dissolved into 8 mL od CH₂Cl₂ at 0°C. The mixture was over-weekend stirred at 0°C. The reaction mixture was washed with a 10% aqueous solution of NaOH, 1 N HCl. The organic phase was dried over MgSO₄, and the solvend removed under reduced pressure. The compound was p further purified by column chromatography on silica gel with hexane and AcOEt as eluent. Collected 0.76 g, yield 99%.

### Step 5

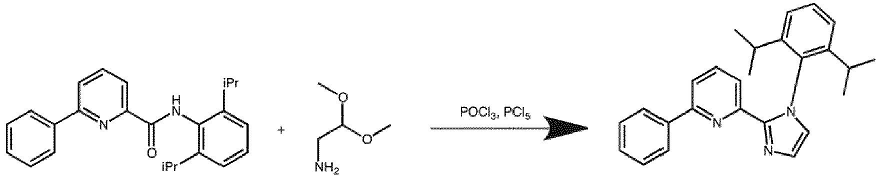

A mixture of benzamide (0.76 g), POCl₃ (3.9 mL) and PCl₅ (0.44 g) was introduced in a 100 mL round-bottom flask and refluxed for 4 hours. The POCl₃ was then removed under reduced pressure. To the crude brown solid, 12 mL of isopropanol and amino acetale (4.6 mL) were added. The resulting mixture was stirred at room temperature for 24 hours. After this time, 25 mL of concentrated HCl were added, and the mixture refluxed for 18 hours. To the mixture NaOH 1 N was added till pH 9 was reached. The solid formed was removed by filtration and the filtrate extracted with CH₂Cl₂, and the desired product purified on column chromatography using hexane and AcOEt. Collected: 0.8 g. HR-MS: 382.2278 corresponding to [M+H]⁺.

### Step 6

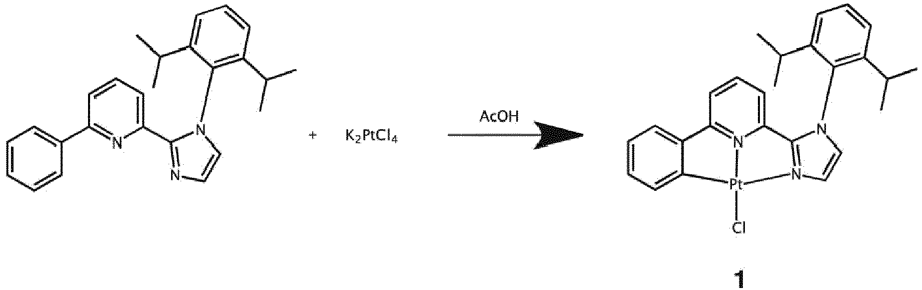

In a 10 mL round-bottom flask, the ligand (22 mg) and K₂PtCl₄ (24 mg) were suspended in 3 mL of AcOH. The reaction mixture was purged with N₂ and refluxed for 3 days. The solvent was eliminated under reduced pressure and the pure product purified by column chromatography using cyclohexane and AcOEt (2:1) as eluent. Collected: 35 mg.

¹H NMR (300 MHz, CD₂Cl₂) δ: 1.04 (6 H), 1.16 (6 H), 2.45 (2 H), 5.94 (1 H), 7.06 (1 H), 7.21 (1 H), 7.43 (6 H), 7.53 (1 H), 7.66 (2 H).

### Example 2 - Synthesis of complex 2

### Step 1

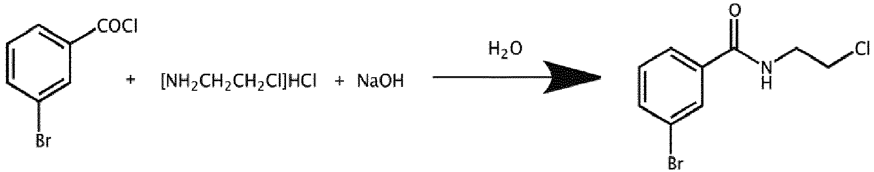

In a 50 mL round bottom flask, NaOH (1.23 g) was dissolved in 12 mL of H₂O. 2-chloroethylamine hydrochloride (1.6 g) was then added and the solution stirred in an ice bath at 0°C until the salt was completely dissolved. 3-bromobenzoyl chloride (3.33 g) was then dropwise added to the solution under stirring. Then, the solution was stirred for 1 hour at 0°C and 1 hour at room temperature. The product was collected as white precipitate, which was filtered, washed with diethyl ether and dried. Collected: 3.2 g, yield 88%.

### Step 2

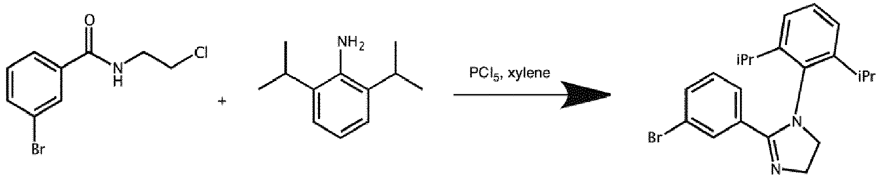

In a 100 mL two-neck round-bottom flask, benzamide (3.1 g) was atted and dissolved in 40 mL of xylene. Then, PCl₅ was added to the solution and refluxed for 2 hours. Afterwards, the reaction mixture was cooled down and 2,6-bis-diisopropylaniline (2.3 g) was added, then the reaction refluxed for 16 hours. Upon cooling the crude product was collected as white solid, washed with toluene, and recrystallized twice from dichloromethane, and washed with a concentrated aqueous solution of NH₃ (32%), then dried over MgSO₄, and the solvent evaporated. Collected 1.3 g, yield 30%.

### Step 3

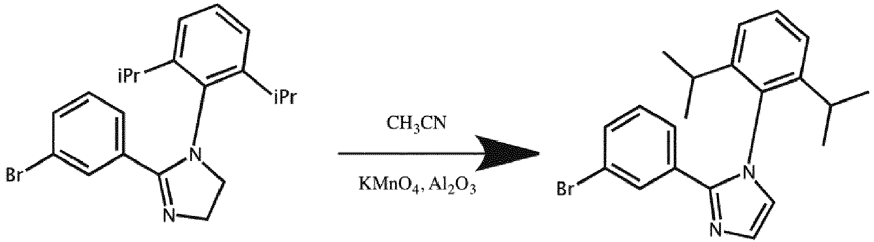

In a 100 mL round-bottom flask the imidazoline (0.5 g) was dissolved in 20 mL of CH₃CN. After dissolution, a mixture of KMnO₄ (0.22 g) and neutral alumina (0.53 g) were added. The resulting mixture was overnight stirred. To the solution were added 5 mL of EtOH, stirred for 30 min, filtered over Celite and the solvent evaporated under reduced pressure.

### Step 4

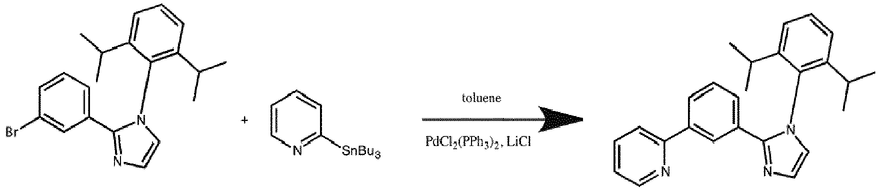

In a 100 mL two-neck round-bottom flask, the bromo-derivative (1.0 g), 2-(tributylstannyl)pyridine (1.1 g), PdCl₂(PPh₃)₂ (0.11 g) and LiCl (3.9 g) were suspended in 15 mL of toluene. After purging with N₂, the reaction mixture was refluxed for 20 hours. Upon cooling, a saturated aqueous solution of KF was added to the dark brown mixture and stirred for 1 hour. The pure desired compound was purified by column chromatography on silica gel with a hexane : EtOAc mixture as eluent, and obtained as white solid. Collected 0.55 g, yield 56%. HR-MS: 382.2278 m/z corresponding to [M + H]⁺, 404.2097 m/z corresponding to [M+ Na]⁺.

### Step 5

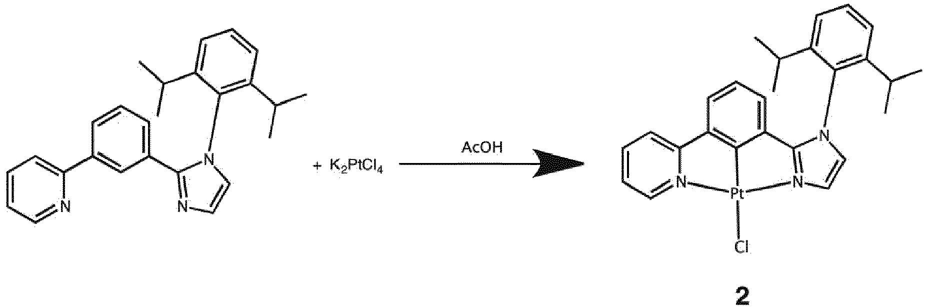

In a two-neck 50 mL round-bottom flask, the starting ligand (0.3 g) and K₂PtCl₄ (0.33 g) were suspended in 15 mL of AcOH, and the resulting mixture purged with N₂, then refluxed for 2 days. The desired compound was purified from the crude on silica gel column chromatography by using cyclohexane and ethylacetate as eluent and obtained as yellowish-green powder. Collected 0.48 g, yield 52%.

¹H NMR (CD₂Cl₂, 300 MHz) δ: 1.02 (6 H), 1.15 (6 H), 2.53 (2 H), 6.00 (1 H), 6.89 (1 H), 7.09 (1 H), 7.35 (4 H) 7.51 (1 H), 7.61 (1 H), 7.70 (1 H) 7.97 (1 H), 9.35 (1 H). HR-MS: 575.17703 m/z corresponding to [M - Cl]⁺.

### Example 3 - Synthesis of complex 3a+3b

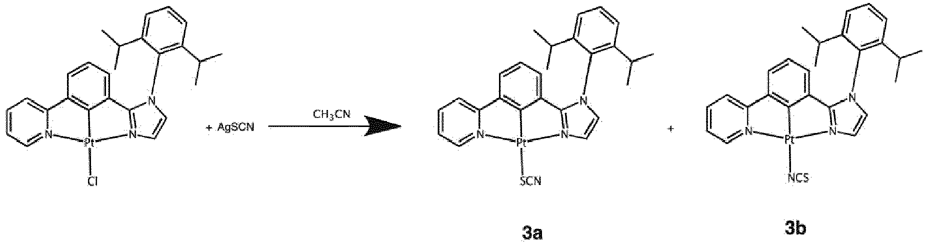

In a 50 mL two-neck round-bottom flask the platinum-chloride derivative (30 mg) was dissolved in 5 mL of CH₃CN, the 8 mg of AgSCN were added, yielding to a turbid solution. The reaction mixture was kept stirring in the dark for 2 days at room temperature. Upon removing the silver derivatives by filtration over Celite, and after washing the evaporated residual with CH₃CN and CH₂Cl₂, the platinum products where purified and isolated as mixture of isomers (8:1 ratio) by column chromatography on silica gel, using hexane and AcOEt (6:1) as eluent mixture.

¹H NMR (400 MHz, CD₂Cl₂) δ: 1.02 (6 H), 1.16 (6 H), 2.50 (2 H), 5.99 (1 H), 6.90 (1 H), 7.10 (1 H), 7.38 (4 H), 7.61 (1 H), 7.71 (1 H), 8.01 (1 H), 8.89 (1 H).

### Example 4 - synthesis of complex 4

### Step 1 - Synthesis of 2-(2-(2-methoxyethoxy)ethoxy)-N-(pyridin-4-yl)acetamide:

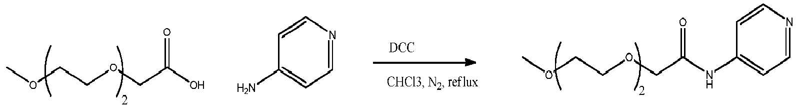

In one neck round bottom flask of 100 mL 4-aminopyridine (4.45 gr, 0.047 mol) and 2-[2-(2-methoxyethoxy)ethoxy]acetic acid (8.44 gr, 0.047 mol) were dissolved in CHCl₃ (50 mL) then N,N'-dicyclohexylcarbodiimide (DCC) (13 gr, 0.063 mol) is added. The solution is refluxed under N₂ overnight. The resulting suspension is then cooled to RT and the urea is filtered off. Acetone was added to the filtrate and kept 4 hours at +4°C, the resulting crystals were filtered off. The filtrate was concentrated under vacuum and was purified from the crude on column chromatography by using neutral alumina as stationary phase and acetone:methanol 9:1 as eluent. Yield 12 g (99%) as a yellow sticky oil. ¹H NMR (CDCl₃, ppm) δ? 9.08 (1H, s), 8.52 (2H, d), 7.67 (1H, d H-pyridine), 4.13 (2H, s), 3.74 (6H, m), 3.60 (2H, m), 3.38 (3H, s).

*Step 2 -* Synthesis of N-(2-(2-(2-methoxyethoxy)ethoxy)ethyl)pyridin-4-amine:

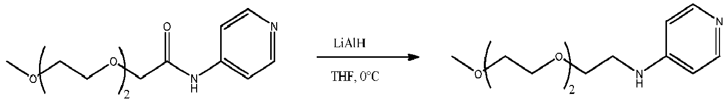

In one neck round bottom flask of 100 mL, 25 mL of LiAlH solution in THF (1 M) was cooled to 0°C with an ice bath, then 2-(2-(2-methoxyethoxy)ethoxy)-N-(pyridin-4-yl)acetamide (4 gr, 0.015 mol) dissolved 5 mL of dry THF was added slowly, while stirring under strong flux of N₂. The solution was stirred overnight in a N₂ atmosphere and allowed to warm till RT. Then the solution was cooled to 0 °C and methanol was added slowly under strong flux of N₂ to quench the excess of LiAlH₄ (LiAIH). Then the solution was filtered on a pad of neutral alumina for chromatography using methanol. The filtrate is then dried under vacuum to give the pure product as brown oil. Yield 2.5 g (66%). ¹H NMR (CDCl₃, ppm) δ: 8.05 (2H, d), 6.37 (2H, d), 4.94 (1 H, broad), 3.60 (12H, m), 3.31 (3H, s), LC-MS (*m*/*z*): calcd. 240.15; found 240.91.

### Step 3- Synthesis of pyridine-2,6-bis(carboximidamide) dihydrochloride

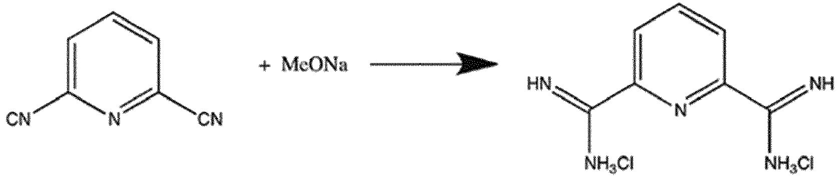

In a 500 mL round bottom flask 2,6-dicarbonitrile (20.0 g, 154.9 mmol, 1.0 eq.) and MeONa (1.67 g, 30.98 mmol, 0.2 eq) were dissolved in 180 mL of dry methanol. After refluxing for 6 hours, ammonium chloride (12.8 g, 340.8 mmol, 2.2 eq.) was added to the reaction mixture and kept overnight under reflux. After cooling, the solid was filtered over a Buchner, washed with Et₂O, dried and collected as pure compound (30.6 g, 130.2 mmol, yield 84.0%) ¹H NMR (D₂O, ppm) δ: 8.43 (1 H, m)

HR-ESI-MS (positive scan): calcd. 235.04 uma; found 164.0903 [M-Cl-HCl]⁺

### Step 4 - Synthesis of 2,6-bis(3-(trifluoromethyl)-1H-1,2,4-triazol-5-yl)pyridine (LCF3)

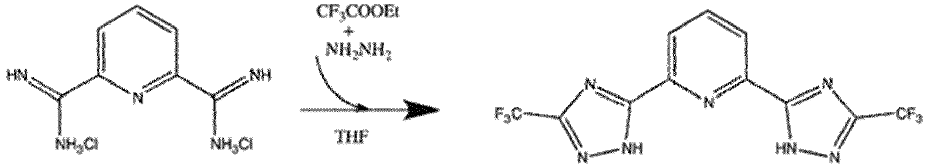

In a 500 mL round-bottom flask, ethyltrifluoroacetate (13.7 mL, 114.4 mmol, 2.2 eq.) was dissolved in 150 mL of THF and hydrazine monohydrate (6.15 mL, 126.7 mmol, 2.2 eq.) was added. The reaction mixture was refluxed for 2 hours, then pyridine-2,6-bis(carboximidamide) dihydrochloride (15.0 g, 63.5 mmol, 1 eq.) and sodium methoxide (2.54 g, 63.5 mmol, 1 eq.) were added. The reaction mixture was kept overnight refluxing under N₂. After cooling, the desired product 2,6-bis(3-(trifluoromethyl)-1*H*-1,2,4-triazol-5-yl)pyridine was purified from the crude on column chromatography by using silica gel as stationary phase and dichloromethane and acetone 9:1 as eluent mixture (2.04 g, 5.84 mmol, yield 9.2%).

¹H NMR (CD₂Cl₂, ppm) δ: 13.82 (2H), 8.21 (2H), 8.06 (1H); ¹⁹F{¹H} NMR (CD₂Cl₂, ppm) δ: -65.61 (¹F)

HR-ESI-MS (negative scan): calcd. 349.05 uma [M]; found 348.0457[M-H]^{∼}

### Step 5

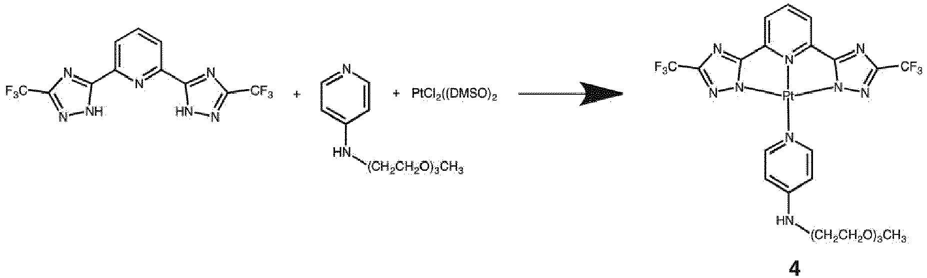

In a 50 mL round-bottom flask, 2,6-bis(3-(trifluoromethyl)-1*H*-1,2,4-triazol-5-yl)pyridine (200.0 mg, 0,572 mmol, 1.0 eq.), PtCl₂(DMSO)₂ (241,85 mg, 0,572 mmol, 1 eq.), N-(2-(2-(2-methoxyethoxy)ethoxy)ethyl)pyridin-4-amine (298,18 mg, 0,744 mmol, 1.3 eq.) and 240 µL of diisopropylethylamine (DIPEA) were dissolved in CHCl₃ (50 mL). The reaction mixture was refluxed overnight under nitrogen. The solution was dried and HCl 1 M (40 mL) was added and stirred overnight at 60°C. The solid was filtered and purified on column chromatography using silica gel as stationary phase and Ethyl acetate as eluent, and obtained as yellow needles (330 mg, 1,145 mmol, yield 37.%). ¹H NMR (CD₂Cl₂, ppm) δ: 9.05 (2H), 8.06 (1 H), 7.81 (2H), 6.68 (2H), 3.77 (2H), 3.67 (6H), 3.56 (2H), 3.44 (2H), 3.37 (3H); ¹⁹F{¹H} NMR (CD₂Cl2, ppm) δ: -60.76 (1F). HR-ESI-MS (positive scan, *m*/*z*): [M-Na]⁻ calcd. 804.135; found 804.135.

### Alternative synthesis of complex 4

In a 50 mL round-bottom flask, compound 2,6-bis(3-(trifluoromethyl)-1*H*-1,2,4-triazol-5-yl)pyridine (400.0 mg, 1.445 mmol, 1.0 eq.), PtCl₂(DMSO)₂ (483.7 mg, 1.445 mmol, 1 eq.), N-(2-(2-(2-methoxyethoxy)ethoxy)ethyl)pyridin-4-amine (357,845 mg, 1,489 mmol, 1.3 eq.) and 400 µL of DIPEA were dissolved in CH₃CN. The reaction mixture was refluxed overnight under nitrogen. The desired compound was purified on column chromatography using silica gel as stationary phase and ethyl acetate as eluent, and obtained as yellow needles (330 mg, 1,145 mmol, yield 37.%). ¹H NMR (CD₂Cl₂, ppm) δ: 9.05 (2H), 8.06 (1 H), 7.81 (2H), 6.68 (2H), 3.77 (2H), 3.67 (6H), 3.56 (2H), 3.44 (2H), 3.37(3H); ¹⁹F{¹H} NMR (CD₂Cl2, ppm) δ: -60.76 (1F). HR-ESI-MS (positive scan, *m*/*z*): [M-Na]⁺ calcd. 804.135; found 804.135.

### Example 5 - synthesis of complex 5

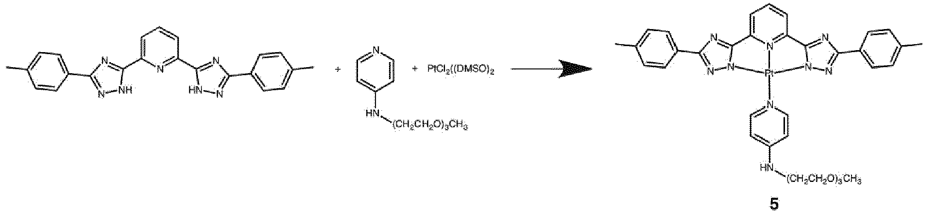

In a 50 mL round-bottom flask, compound 2,6-bis(3-(*p*-tolyl)-1*H*-1,2,4-triazol-5-yl)pyridine (ref: De Cola and coworkers. Chem. Mater. 2011, 23, 3659-3667) (200.0 mg, 0.558 mmol, 1.0 eq.), PtCl₂(DMSO)₂ (214.65 mg, 0.558 mmol, 1.1 eq.), N-(2-(2-(2-methoxyethoxy)ethoxy)ethyl)pyridin-4-amine (264.65 mg, 0.66 mmol, 1.3 eq.) and 200 µL of DIPEA were dissolved in CHCl₃. The reaction mixture was refluxed overnight under nitrogen. The solution was dried and HCl 1 M (40 mL) was added and stirred overnight at 60°C. The solid was filtered and purified on columnchromatography using neutral alumina as stationary phase and Acetone as eluent, and obtained as yellow solid (30 mg, 0.036 mmol, yield 7%). ¹H NMR (CD₂Cl₂, ppm) δ: 9.54 (2H), 8.05 (4H), 7.76 (1H), 7.58 (2H), 7.27 (4H) 6.62 (2H), 5.54 (1H), 3.70 (10H), 3.39 (3H), 3.33 (2H) HR-ESI-MS (positive scan, *m*/*z*): [M-Na]⁺ calcd. 848.254; found 848.236.

### Example 6 - synthesis of complex 6

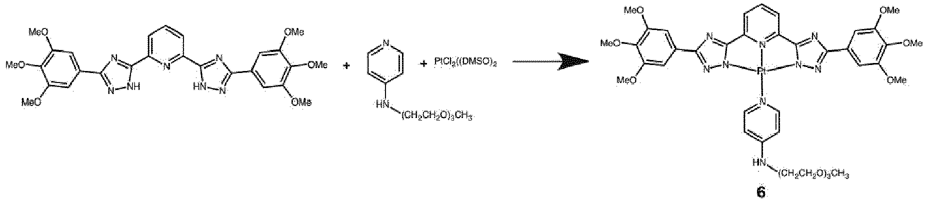

2,6-bis(3-(3,4,5-trimethoxyphenyl)-1*H-*1,2,4-triazol-5-yl)pyridine was prepared in a similar way as 2,6-bis(3-(*p*-tolyl)-1*H*-1,2,4-triazol-5-yl)pyridine, with the appropriate modification to the starting material employed.

In a 50 mL round-bottom flask, compound 2,6-bis(3-(3,4,5-trimethoxyphenyl)-1*H-*1,2,4-triazol-5-yl)pyridine (197 mg, 0.361mmol, 1.0 eq.), PtCl₂(DMSO)₂ (152.479 mg, 0.361 mmol, 1 eq.), N-(2-(2-(2-methoxyethoxy)ethoxy)ethyl)pyridin-4-amine (216.91 mg, 0.54 mmol, 1.3 eq.) and 157 µL of DIPEA were dissolved in CHCl₃. The reaction mixture was refluxed overnight under nitrogen. The solution was dried and HCl 1 M (40 mL) was added and stirred overnight at 60°C. The solid was filtered and purified on column chromatography using neutral alumina as stationary phase and CH₂Cl₂/acetone 8:2 → acetone/MeOH 4:1 as eluent mixture gradient. The pure desired product was obtained as yellow solid (80 mg, 0.081 mmol, yield 22%). ¹H NMR (CD₂Cl₂, ppm) δ: 9.50 (2H), 7.91 (1 H), 7.68 (2H), 7.76 (4H), 6.68 (2H) 3.97 (12H), 3.84 (6H), 3.73 (2H), 3.64 (8H), 3.54 (2H), 3.41 (2H), 3.36 (2H).

### Example 7 - synthesis of complex 7

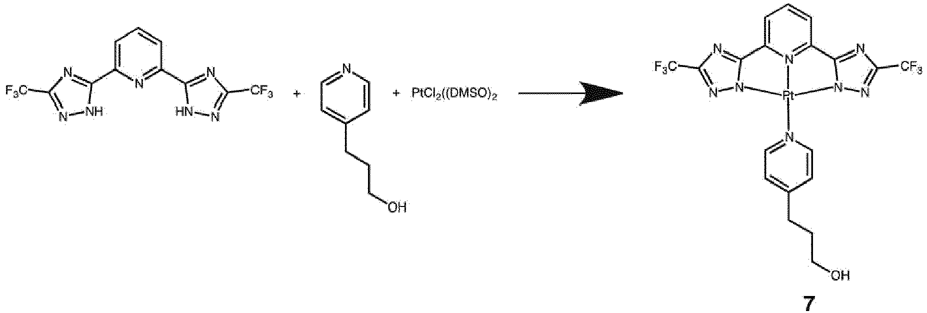

The synthesis of the 2,6-bis(3-(trifluoromethyl)-1*H*-1,2,4-triazol-5-yl)pyridine has been already reported elsewhere.(De Cola and coworkers, *Ger. Offen.* DE 102011001007 A1 20120906). In a 100 mL 1-neck round-bottom flask, PtCl₂(DMSO)₂ (350 mg), 2,6-bis(3-(trifluoromethyl)-1*H*-1,2,4-triazol-5-yl)pyridine (289 mg), and 4-pyridinepropanol (114 µL) were dissolved in 30 mL of a 3:1 2-ethoxyethanol and water mixture. Upon addition of few drops of Et₃N, the reaction mixture was overnight heated at 83°C. The pure desired compound was purified from the crude on silica gel column chromatography by using THF: hexane 4:1 as eluent mixture. The compound was obtained as green powder. Collected: 470 mg, yield 84%.

¹H NMR (300 MHz, THF-d8) δ: 0.78 (2H), 1.82 (2 H), 2.80 (2 H), 3.67 (1 H), 7.50 (2 H), 7.75 (2 H), 8.10 (1 H), 9.43 (2 H).

¹⁹F NMR (282 MHz, THF-d8) δ: -65.10 (6F)

HR-MS (negative scan): 1393.13649 corresponding to [2M + Cl]⁻.

### Example 8 - synthesis of complex 8

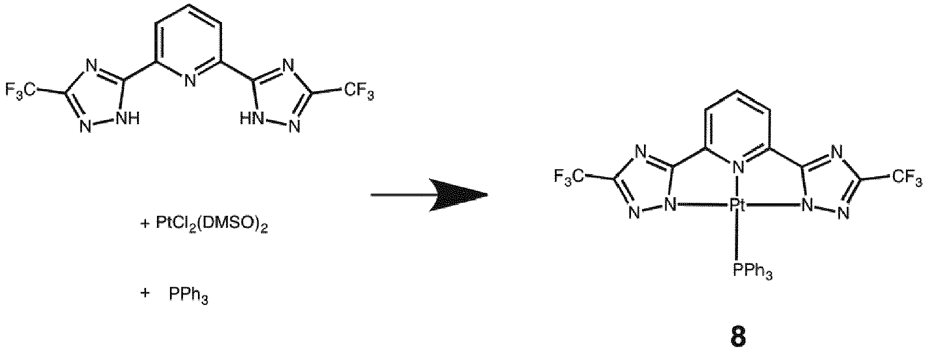

### Example 9 - synthesis of complex 9

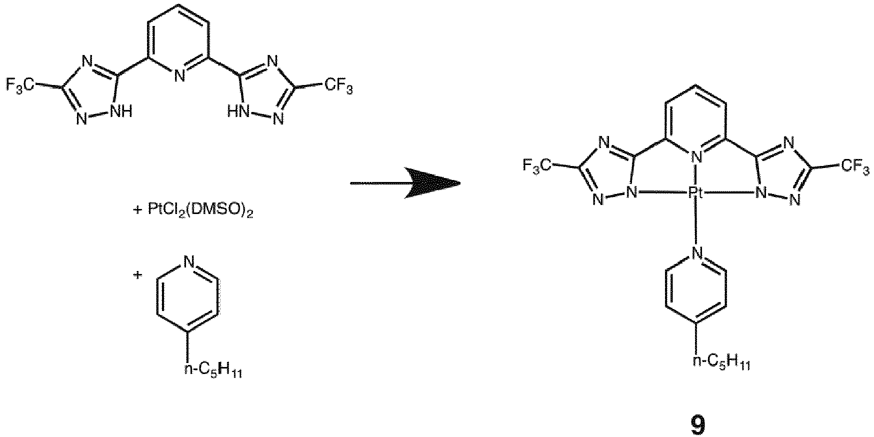

### Example 10 - synthesis of complex 10

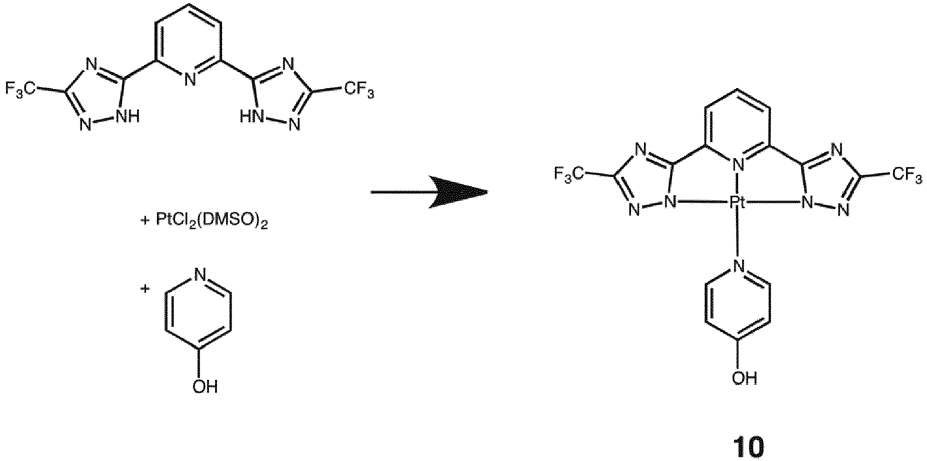

### Example 11 - synthesis of complex 11

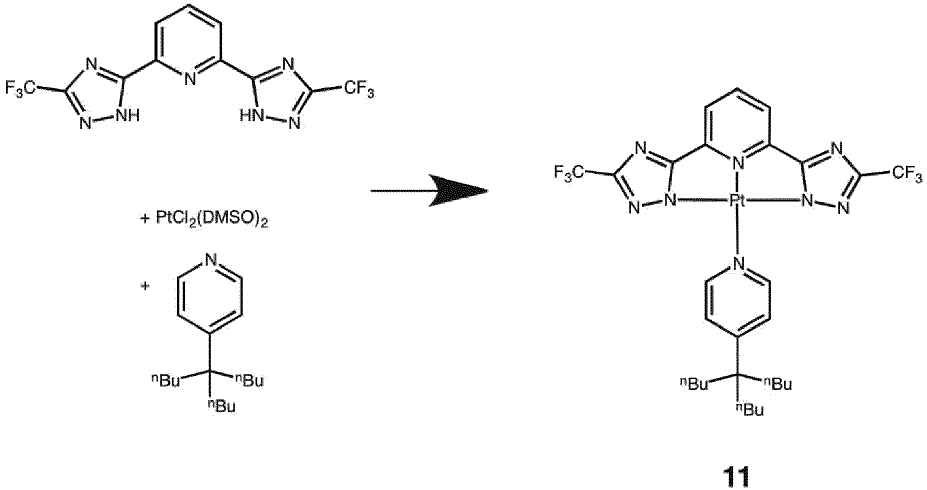

### Example 12 - synthesis of complex 12

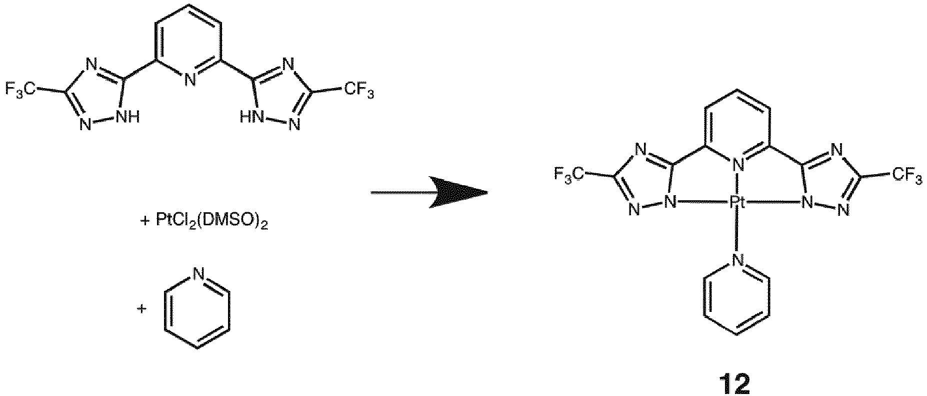

### Example 13 - synthesis of complex 13

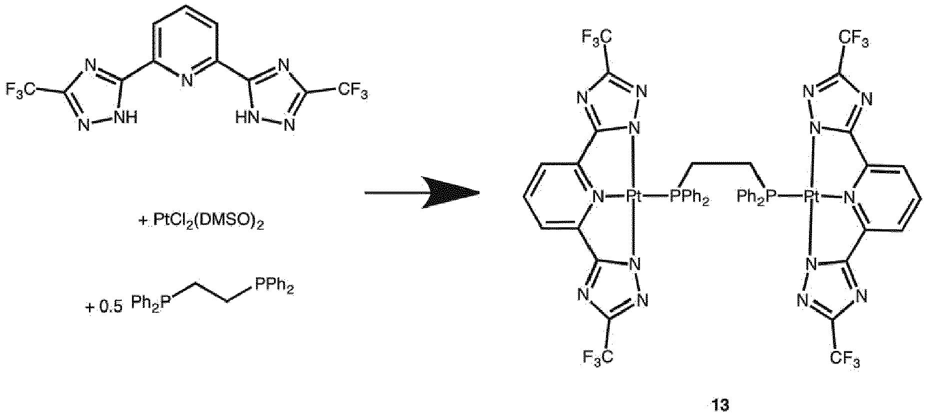

### Example 14 - synthesis of complex 14

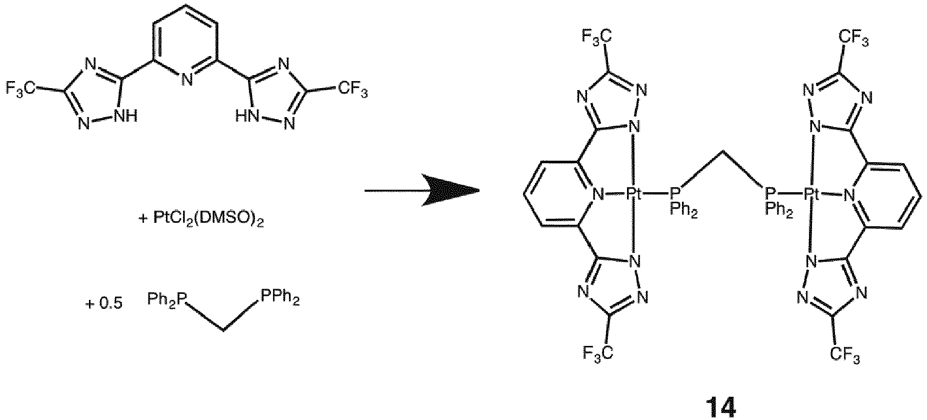

### Example 15 - synthesis of complex 15

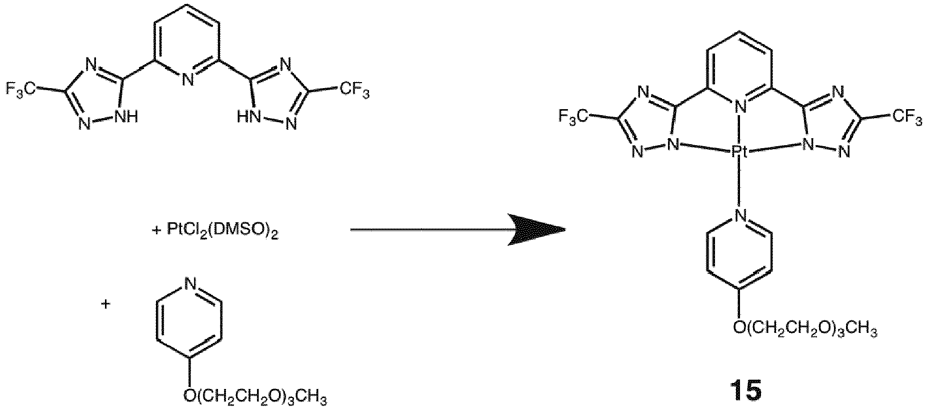

### Example 16 - synthesis of complex 16

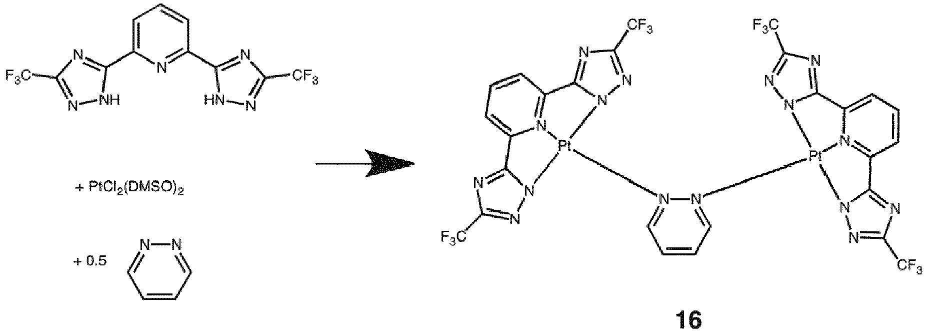

### Example 17 - synthesis of complex 17

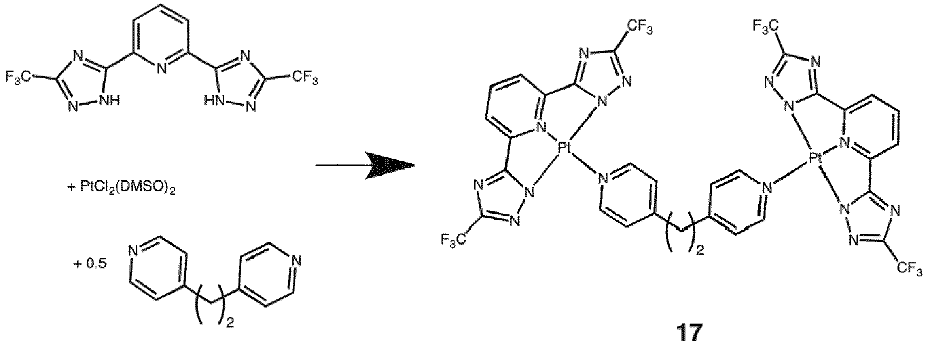

Synthesis according to examples 8 to 17 are described in WO 2012/117082.

### Example 18 - Mechanochromic luminescent properties

### 18.1.

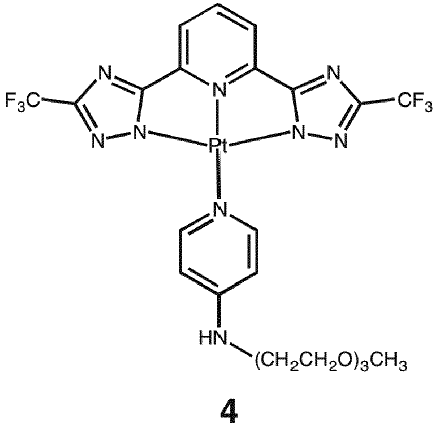

Mechanochromic luminescent properties of the complex above are depicted in Figure 1.

### 18.2.

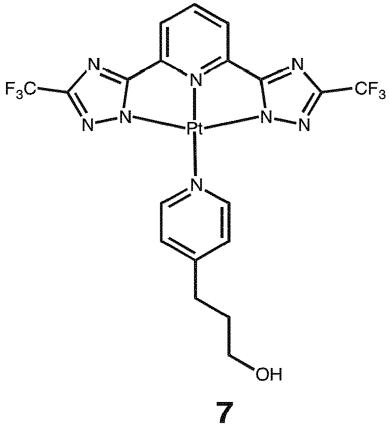

Mechanochromic luminescent properties of the complex above are depicted in Figure 2.

Complex 7 (*vide infra*) presents also reversible pressure dependency (elastochromism) and vapochromism.

### Experimental section

### Materials and Methods

*Synthesis and Characterization.* All the reactions were carried out under inert atmosphere (Schlenk technique). All the solvents and reagents were used as received from Aldrich or Fluka without any further purification. K₂PtCl₄ was purchased from Precious Metals Online (PMO), Australia. 4-pentylpyridine was bought from TCI Europe. All the chemicals were purchased and used as received. PtCl₂(DMSO)₂ was prepared accordingly to previously reported methods. The compounds were purified by column chromatography by using silica gel 60 (230-400 mesh) as stationary phase. ¹H and ¹⁹F NMR spectra were recorded on a Bruker Avance 400 spectrometer. The ¹H NMR chemical shifts (δ) are given in ppm and referred to residual protons on the corresponding deuterated solvent. All deuterated solvents were used as received without any further purification. All coupling constants (*J*) are given in Hertz (Hz). Electrospray ionization mass (ESI-MS) spectra were recorded on a Bruker Daltonics (Bremen, Germany) MicroTOF with loop injection.

*Photophysical measurements: room temperature in solution state.* Absorption spectra were measured on a Shimadzu UV-3600 spectrophotometer double-beam UV-VIS-NIR spectrometer and baseline corrected. Steady-state emission spectra were recorded on a Horiba Jobin-Yvon IBH FL-322 Fluorolog 3 spectrometer equipped with a 450 W xenon arc lamp, double-grating excitation, and emission monochromators (2.1 nm mm⁻¹ of dispersion; 1200 grooves mm⁻¹) and a TBX-4-X single photon-counting detector. Emission and excitation spectra were corrected for source intensity (lamp and grating) and emission spectral response (detector and grating) by standard correction curves.

*Solid state measurements.* Steady-state measurements on solid state samples were recorded on a Horiba Jobin-Yvon IBH FL-322 Fluorolog 3 spectrometer as described before. Time-resolved measurements were performed using the time-correlated single-photon-counting option on the Fluorolog 3. NanoLEDs (402 and 450 nm; fwhm <200 ns) with repetition rates between 10 kHz and 1 MHz was used to excite the sample. The excitation sources were mounted directly on the sample chamber at 90° to a double-grating emission monochromator (2.1 nm mm⁻¹ of dispersion; 1200 grooves mm⁻¹) and collected by a TBX-04-X single-photon-counting detector. The photons collected at the detector are correlated by a time-to-amplitude converter to the excitation pulse. Signals were collected using an IBH DataStation Hub photon-counting module and data analysis was performed using the commercially available DAS6 software (Horiba Jobin-Yvon IBH).

*Mechanical grinding experiments.* Experiments of mechanical grinding were performed on solid-state (powder) samples of the complexes by hand and using a mortar. The photophysical measurements on the solid-state samples were performed before and after grinding procedure, using the experimental setup described above.

## Claims

1. Use of at least one luminescent platinum complex of formula (Z) as mechanochromic, and especially piezochromic compounds, wherein said platinum complex of formula (Z) is defined by 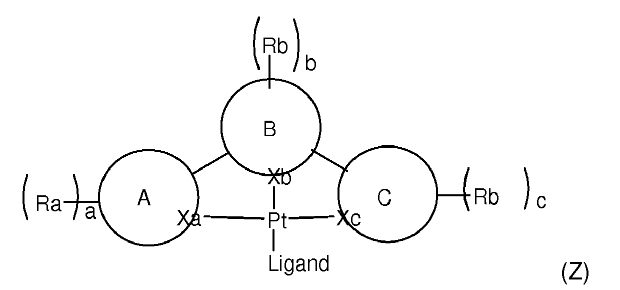 wherein
rings A, B and C are 5- or 6-members aromatic rings including atoms Xa, Xb and Xc which are linked to Platinum (Pt), wherein Xa, Xb and Xc are each independently a nitrogen atom or a carbon atom or a sulfur atom or an oxygen atom or a phosphorus atom;
other members of rings A, B and C are carbon or nitrogen or sulfur or oxygen or phosphorus atoms;
rings A and B are linked by a covalent bond, rings B and C are linked by a covalent bond,
rings A, B and C optionally bearing one or more substituents Ra, Rb, and Rc, respectively,
a is the number of substituents Ra,
b is the number of substituents Rb,
c is the number of substituents Rc;
a, b, and c being independently 0 or from 1 to 4;
Platinum ion is coordinated to a "Ligand" referred to as "L";
L is an organic ligand or an ion;
Ra, Rb, and Rc are each independently selected from the group consisting of:
(i) H, F, Cl, Br, I, CH₃, CF₃, NO₂, OH, thiocyanate, isothiocyanate, -NCO, - CN, CHO, COOH, keto, amine, amide, a saturated or unsaturated, linear, branched or cyclic alkyl group, a haloalkyl group, including fluoroalkyl and perfluoroalkyl, an aralkyl group, an alkenyl group, alkynyl group, an aryl group, an amino group, a mono- or di-alkylamino group, a mono- or diaryl amino group, an alkoxy group, an epoxy group an aryloxy group, a heteroaryloxy group, an alkoxycarbonyl group, an acyloxy group, an acylamino group, an alkoxycarbonylamino group, an aryloxycarbonylamino group, a sulfonylamino group, a sulfamoyl group, a carbamoyl group, an alkylthio group, a sulfinyl group, an ureido group, a phosphoramide group, a hydroxyl group, a mercapto group, a halogen atom, a cyano group, a sulfo group, a carboxyl group, a nitro group, a hydrazino group, a substituted silyl group, a polymerizable group, and any combination of these groups,
(ii) a group of atoms comprising or consisting of linear or branched, chiral or achiral, from 1 to 36 carbon atoms containing any combination of the following groups either pendant or included in the carbon atom chain when proper: F, Cl, Br, I, CH₃, CF₃, NO₂, OH, CHO, COOH, thiocyanate, isothiocyanate, keto, amine, mono-or di- alkylamino, mono- or diaryl-amino, amide, alkoxy, epoxy, heteroaryloxy, alkoxycarbonyl, acyloxy, acylamino, mercapto, sulfonylamino, cyano, carbamoyl, sulfonylamino, sulfamoyl, sulfinyl, mono- or disulfide, linear or branched, chiral or achiral, from 1 to 36 carbon atoms chains selected from aliphatic or alicyclic alkyl, haloalkyl, alkenyl, alkynyl, aryl, ester, carboxy, amine, sulfoxide, amide, phosphine or heterocyclic moieties,
(iii) a group of atoms comprising or consisting of double or triple bonds containing, optionally polymerizable, groups, including either linear or branched structures, for example ethylenes, allyls, ethynyls, norbonene, alkylacrylates, arylacrylates, alkyl-cyanoacrylates, aryl-cyanoacrylates, diene, dienofiles, butadienes, melamines, diimide, aldehydes, alkylamines, arylamines, celluloses, alkylanhydrides, arylanhydrides, carboxy, diimides, phatalates, carbonates, siloxanes, vinyls, butyrates, thiophenes, styrenes, charged and/or uncharged sulphonates, sulphones, acetales, chetales, phenylethers, alcohols, phenylsulphones, ethersulphones, carbamates;
(iv) a group of atoms comprising or consisting of one of the following: phosphonium, biotin, aminoacid, polypeptide, protein, antibody, nucleoside, nucleotide, polynucleoside, polynucleotide, diols, polyols, glycol, polyglycols, monosaccharide, disaccharides and polysaccharides moieties, either natural or synthetic,
(v) a group of atoms comprising or consisting of one or more aromatic rings, such as Phenyl, Chlorophenyl, Tolyl, Anisyl, Trifluoromethylphenyl, Benzyl, Fluorenyl, Carbazolyl, Cyclohexyl, Menthyl, Allyl, Hydroxyphenyl, Pentaflurophenyl, Carboxyphenyl, Naphthyl, Pyridyl, Furyl, Bis-(trifluoromethyl)-phenyl, Carbene, N-heterocyclic Carbene, Imidazolyl, Pyridazinyl, Pyrazinyl, Pyrimidyl, Phosphinyl, any aromatic ring fused with rings A, B and/or C, such as 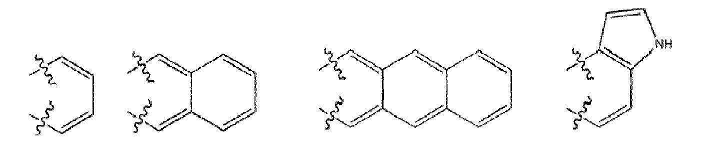 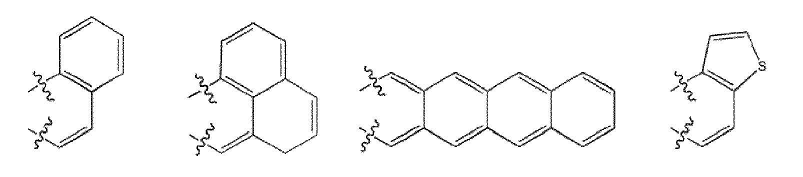 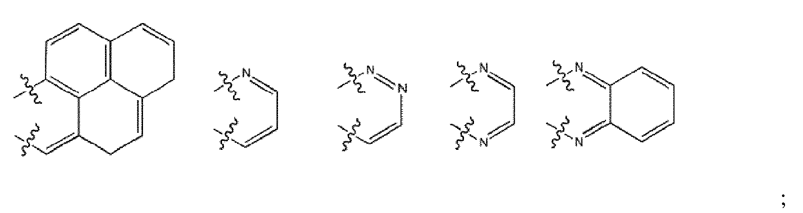
(vi) including precursors, and derivatives thereof.

2. Use according to claim 1, wherein rings A and/or C are represented by pyridine: 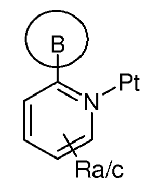 wherein Ra/c represent independently 1 to 4 substituents Ra and/or Rc, or is/are optionally absent.

3. Use according to any one of claims 1 to 2, wherein rings A and/or C are represented by : 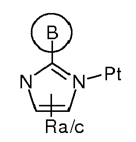 wherein Ra/c represent independently 1 or 2 substituents Ra and/or Rc, or is/are optionally absent.

4. Use according to any one of claims 1 to 2, wherein rings A and/or C may be represented by (with apparent links to Pt and B): 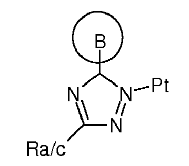 wherein Ra/c represent Ra and/or Rc, and is/are optionally absent.

5. Use according to any one of claims 1 to 2, wherein said rings A-B-C are selected from the group consisting of: 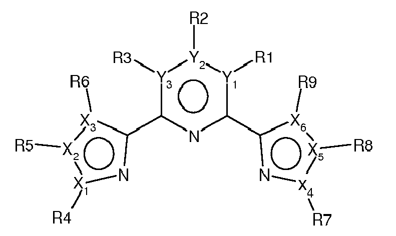 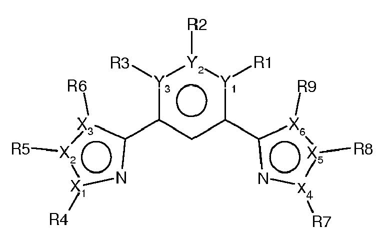 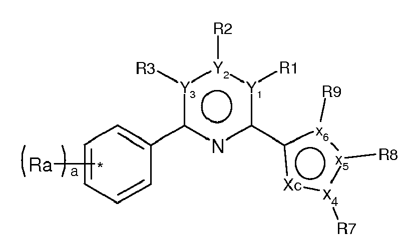 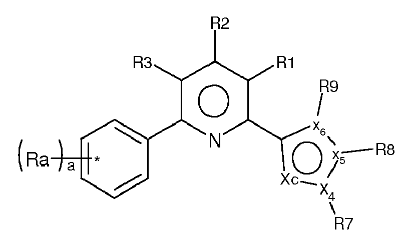 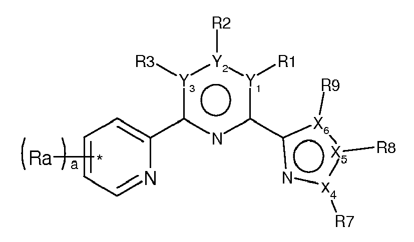 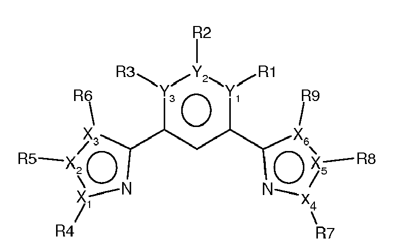 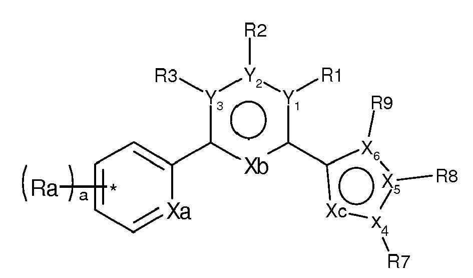 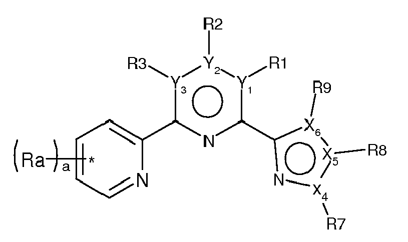 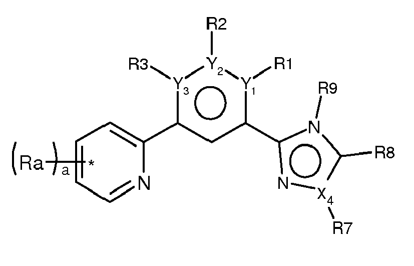 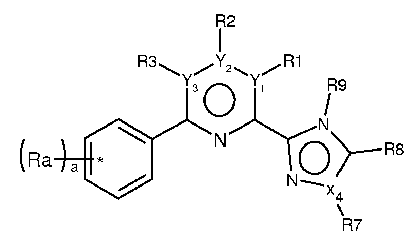 and 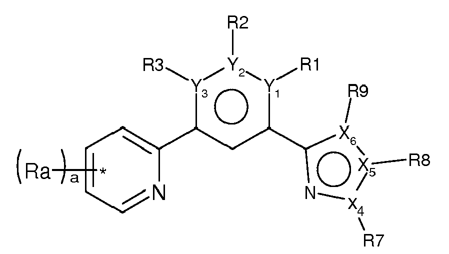
wherein Rᵢ₌₁₋₉ have each independently the same meaning as Ra, Rb and Rc, and
Yᵢ₌₁₋₃ and Xᵢ₌₁₋₆ are each independently a carbon or nitrogen atom;
if Yᵢ₌₁₋₉ or Xᵢ₌₁₋₁₈ is a nitrogen atom, then the corresponding substituent Rᵢ₌₁₋₉ is absent.

6. Use according to any one of claims 1 to 5, wherein L is represented by formula (III) or (IV) below: 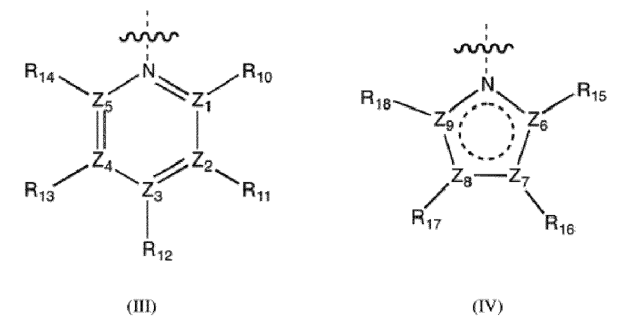
Zᵢ₌₁₋₉ represents independently a carbon or nitrogen atom;
Rᵢ₌₁₀₋₁₈ are each independently selected from the group consisting of substituents defined by Ra, Rb and Rc;
if Zᵢ₌₁₋₉ or Xᵢ₌₁₋₁₈ is a nitrogen atom, then the corresponding substituent Rᵢ₌₁₀₋₁₈ is absent
or
L is Cl, Br, I, F, SCN, NSC, CN, OH, pyrazolate, triazolate, or tetrazolate.

7. Method for modifying emission and/or excitation spectra of at least one platinum complex of formula (Z), as defined in any one of claims 1 to 6, comprising exposing at least one platinum complex of formula (Z) to at least one external mechanical stimulus.

8. A compound represented by the following formulae (Z1), (Z2), (Z3), (Z4) and (Z5): 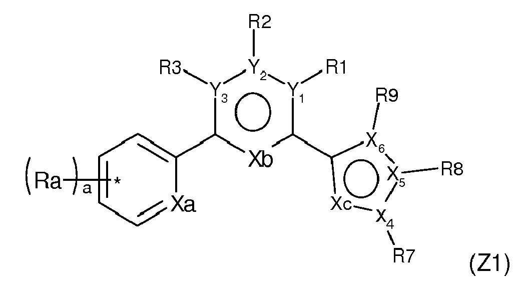 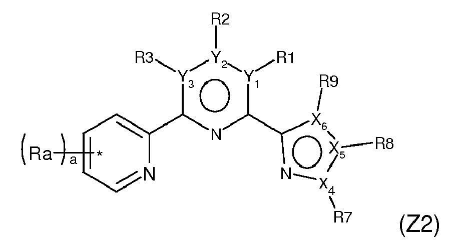 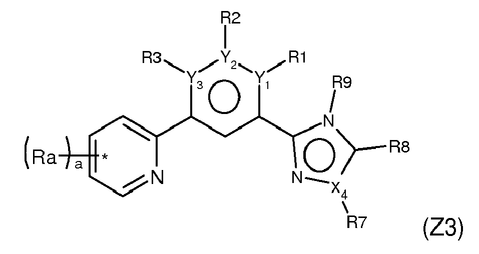 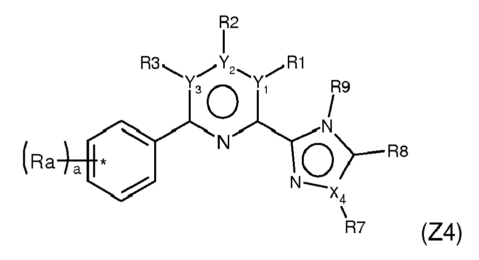 and 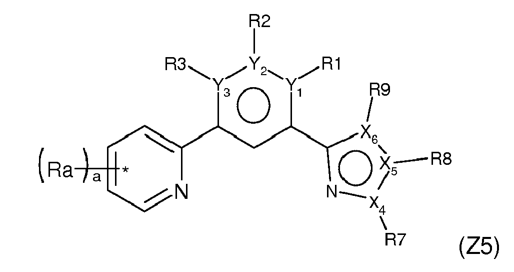
wherein Rᵢ₌₁₋₈ (R1-R8) have each independently the same meaning as Rb and Rc, wherein Ra, Rb, and Rc are as defined in any one of claims 1 to 7;
and
Yᵢ₌₁₋₃ and Xᵢ₌₁₋₆ are each independently a carbon or nitrogen atom;
- if Yᵢ₌₁₋₉ or Xᵢ₌₁₋₁₈ is a nitrogen atom, then the corresponding substituent Rᵢ₌₁₋₉ is absent
wherein in formulae (Z1), (Z2), (Z3) and (Z4) R9 represent an aromatic ring or a polymerizable monomer or polymer, and
wherein in formula (Z5), R9 has the same meaning as Rc.

9. A platinum complex according to formula (Z) as defined in any one of claims 1 to 7, wherein rings A-B-C are defined according to claim 8.

10. Composition comprising at least one polymer and at least one platinum complex of formula (Z), as defined in any one of claims 1 to 7 or 9.

11. Composition according to claim 10, wherein said composition comprises at least one polymer.

12. Composition according to claim 11, wherein said polymer is a tridimensional matrix or gel.

13. Device comprising at least one changing color zone, wherein said zone comprising at least one platinum complex of formula (Z) or composition as defined in any one of claims 1 to 12, wherein said changing color zone present a first color which changes into a second color upon exposition of said changing color zone to at least one external mechanical stimuli.

14. A kit comprising a product comprising or consisting of at least on platinum complex of formula (Z) or a composition as defined in any one of claims 1 to 12, said kit also comprising a notice of information that said product color changes upon exposition to at least one external mechanical stimulus.

15. A platinum complex (Z) as defined in any one of claims 1 to 7 or 9, wherein L is represented by formula (III) or (IV) below: 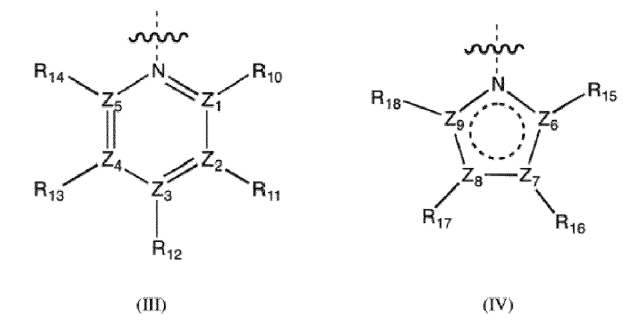
Zᵢ₌₁₋₉ represents each a carbon atom, R₁₀, R₁₁, R₁₃, R₁₄, R₁₅ and R₁₈ are hydrogen atoms and R₁₂, R₁₆ and/or R₁₇ are hydroxyalkyl, aminoalkyl optionally containing polymerizable groups.
or
L is Cl, Br, I, F, SCN, NSC, CN, OH, pyrazolate, triazolate, or tetrazolate.
